# EUROPÄISCHE PATENTSCHRIFT

(11) **EP 2 049 221 B1**
(45) Veröffentlichungstag und Bekanntmachung des Hinweises auf die Patenterteilung: **27.04.2016**
(21) Anmeldenummer: 07818018.9
(22) Anmeldetag: 10.08.2007
(51) Int. Cl.: A47J 31/60, C02F 1/00, C02F 1/28

(54) **TANK**
TANK
RÉSERVOIR

(30) Priorität: 10.08.2006 DE 102006037636
(43) Veröffentlichungstag der Anmeldung: 22.04.2009
(73) Patentinhaber: Aquis Wasser-Luft-Systeme GmbH, Lindau, 9445 Rebstein (CH)
(72) Erfinder: WALLERSTORFER, Kurt, A-5204 Strasswalchen (AT); WAWRLA, Andreas, CH-9443 Widnau (CH); SCHOLZ, Roland, 42781 Haan (DE)
(74) Vertreter: Otten, Roth, Dobler & Partner mbB Patentanwälte
(86) Internationale Anmeldenummer: PCT/EP2007/007094
(87) Internationale Veröffentlichungsnummer: WO 2008/017495

(56) Entgegenhaltungen:
- WO-A-2006/050114
- DE-A1- 19 648 405
- DE-A1-102004 049 877
- DE-U1- 20 380 258
- GB-A- 2 346 568
- US-A1- 2004 129 627
- US-B1- 6 576 129

## Beschreibung

Die Erfindung betrifft einen Wassertank mit Filterpatrone nach dem Oberbegriff des Anspruchs 1.

In verschiedenen Maschinen, beispielsweise in Kaffee- oder Espressomaschinen wird ein Wassertank zur Bevorratung einer Flüssigkeit, im Falle von Kaffee- oder Espressomaschinen zur Bevorratung von Wasser, vorgesehen, wobei eine Filterpatrone in den Tank einsetzbar ist, um das Wasser vor der Verarbeitung in der Maschine aufzubereiten. Bekannte Filterpatronen weisen im unteren Bereich einen Einlass auf, durch den das Wasser seitens der zugehörigen Maschine angesaugt wird. Hierbei wird das Wasser über ein Filterbett geleitet und gelangt über einen Anschluss der Filterpatrone an einen entsprechenden Sauganschluss des Wassertanks in die Maschine.

Für einen zuverlässigen Betrieb der Maschine ist es von großer Bedeutung, dass ihr nur Wasser mit einer zumindest den Mindestanforderungen entsprechenden Wasserqualität zugeführt wird, wozu vorzugsweise eine in ihren Filterparametern definierte Filterpatrone verwendet wird. Durch eine mangelhafte Filterpatrone wird der Maschine unzureichend oder falsch aufbereitetes Wasser zugeführt, was zu negativen Auswirkungen, beispielsweise Verkalkung oder dergleichen, bis hin zu Maschinendefekten führen kann. Die Maschinensteuerung ist nicht in der Lage, rechtzeitig die vorgesehenen Wartungsintervalle einzuleiten, wenn sie von einer Filterpatronen des korrekten Typs ausgeht., diese jedoch tatsächlich nicht verwendet wird. Bei der Verwendung ungenügender Filterpatronen kommt es zu Problemen nicht nur in der Betriebssicherheit der Maschine, sondern auch in Fragen der Gewährleistung usw. Es ist daher von großer Bedeutung sicherzustellen, dass stets nur zugelassene Filterpatronen zum Einsatz kommen.

Andererseit.s ist es möglich, dass das zu filternde Wasser, bereits eine sehr hohe Qualität aufweist, so dass zumindest bei bestimmten Anwendungsfällen die vom einzusetzenden Filter erzielte Filterwirkung gar nicht in vollem Umfang von Nöten ist.

Die DE 10 2004 049 877 A1 of fenbart eine in einen Wasserbehälter einsetzbare Filterkartusche mit einem im Querschnitt einstellbaren Bypass zu der durch die Filterkartusche verlaufenden Filterstrecke.

Der Erfindung kann daher die objektive Aufgabe zugrunde gelegt werden, Mittel zur zuverlässigen Wasseraufbereitung gemäß für einen bestimmten Anwendungsfall definierter Filterparameter vorzuschlagen. Die Lösung dieser Aufgabe erfolgt gemäß Anspruch 1 ausgehend von dem im Oberbegriff formulieren Wassertank mit Filterpatronen durch dessen Kennzeichen.

In den abhängigen Ansprüchen sind vorteilhafte und zweckmäßige Weiterbildungen angegeben.

Dementsprechend zeichnet sich ein erfindungsgemäßer Tank mit Sauganschlusselement zum Ansaugen von Wasser mittels Unterdruck aus dem Tank und einem Filteranschluss zum Anschluss einer Filterpatrone im Inneren des Tanks dadurch aus, dass eine Verschneidevorrichtung bzw. Verschnitteinstellung vorgesehen ist, mit der ein Bypassstrom von ungefiltertem oder auf andere Weise aufbereitetem Wasser am Filterbett vorbeigeführt wird. Hierdurch kann die Qualität des einem Wasser aufbereitenden und/oder verbrauchenden Gerät zugeführten Wassers z. B. anwendungs- und/oder gerätespezifisch durch Mischen des durch die Filterpatrone gefilterten und nicht durch sie gefilterten Wassers oder durch Mischen des durch eine Filterstrecke gefilterten Wassers mit durch eine oder mehrere anderweitige Filterstrecke gefilterten Wasser eingestellt werden. Im Weiteren kann so die Betriebslaufzeit dadurch optimiert werden, dass der Filter nicht eher ausgetauscht werden muss, als dies bei der Bereitstellung einer für den jeweiligen Anwendungsfall ausreichenden Wasserqualität durch Erschöpfung des Filtermaterials der Fall ist. Bei der Durchleitung einer im Vergleich geringeren Menge an Wasser aufgrund der erfindungsgemäßen Verschneidung des zu filternden Wassers kann daher das hierfür verwendete Filtermaterial aufgrund seiner dadurch über den zeitlichen Verlauf betrachtet geringeren Erschöpfung somit länger zur Verfügung stehen.

Unter einem tankseitigem Filterausschlusselement sind erfindungsgemäß direkt und/oder indirekt am Tank angeordnete und/oder ausgebildete Elemente zu verstehen, wie vorstehende und/oder vertiefte Aufnahme- und/oder Fixier- und/oder Kodier- und/oder Dichtelemente. Diese können z.B. als fest mit dem Tank verbundene oder verbindbar ausgebildete Ausschlussstutzen, als Haken, Ösen, Adapter oder dergleichen ausgebildet sein.

Der tankseitige Filteranschluss ist hierbei vorzugsweise im Bodenbereich des Tanks ausgebildet. Er kann durchaus aber auch wenigstens teilweise oder auch vollständig in einer Ecke und/oder an einer Seitenwand des Tanks innen angeordnet sein, je nach dem an welcher Stelle der Anschluss zwischen dem Wassertank und einer geräteseitigen Abflussleitung vorgesehen ist. Zum Beispiel ist auch ein in einem vom Boden des Tanks in dessen betriebsmäßiger Einbaulage nach oben hin beabstandet aus dem Tank herausgeführtes tankseitiges Filteranschlusselement denkbar.

Durch solche Ausführungsformen kann z.B. ein kannen- und/oder schubladenartiger Tank realisiert werden, in welchem wiederum nur eine mit einem entsprechenden kodierten filterseitigen Tankanschlusselement versehene Filterpatrone eingesetzt werden kann. Die geräteseitigen Verbindung des Tankanschlusses kann sowohl bei diesem als auch bei den vorbeschriebenen Ausführungsformen als Steckanschluss an ein entsprechend komplementäres geräteseitiges Tankanschlusselement angeschlossen werden. Das vom Tankboden beabstandete tankseitige Filteranschlusselement kann beispielsweise auch als an einer Tankwand einhängbares Filteranschlusselement ausgebildet sein, z.B. in der Form einer Rohrleitung, die bei eingesetzter Patrone mit entsprechend passender Kodierung zur Ausleitung des in den Tank eingefüllten und durch die Filterpatrone gefilterten Rohwassers dient.

Bei entsprechend tiefliegender Anordnung der Wassereintrittsöffnungen für die Filterstrecke kann auch mit einer derartigen Ausführungsform der wesentliche Inhalt des Tanks entleert werden, so dass dieser keine oder nur eine geringe Menge an nicht durch die Filterstrecke führbares Todwässer aufweist.

Insbesondere vorteilhaft kann die Verschneidevorrichtung hierbei so ausgebildet sein, dass die beizumischende Menge des ungefilterten oder auf andere Weise aufbereiteten Wassers einstellbar ist. Dies ist beispielsweise mit einer oder mehreren Bypassöffnungen möglich, die zur Einstellung der am Filterbett vorbeigeleiteten Wassermenge variabel einstellbar geöffnet werden. Eine solche Verschnitteinstellung kann beispielsweise über die Winkelposition der Einbaulage der Filterpatrone verwirklicht werden. In einer besonders bevorzugten Ausführungsform kann dies auch in Kombination mit einer Kodierungsstruktur mit der Vorgabe fester Winkelpositionen über die Einbaulage der Patrone erfolgen. Zu möglichen Kodierstrukturen wird nachfolgend noch näher Bezug genommen.

Die Verschnittmenge an ungefiltertem oder auf andere Weise aufbereitetem Wasser kann dabei durch entsprechend ausgebildete Öffnungen eingestellt werden, die das Tankinnere direkt mit dem Abfluss des Tanks verbinden, durch welche das durch die Filterpatrone gefilterte Wasser dem betreffenden Gerät zugeführt wird. Diese Öffnungen können je nach Einsetzwinkel der Filterpatrone, ggf. in Abhängigkeit einer solchen Kodierungsstruktur, unterschiedlich groß ausgebildet bzw. geöffnet sein und/oder in unterschiedlicher Anzahl geöffnet werden, so dass sich abhängig von der Einbaulage der Filterpatrone ein unterschiedliches Verschnittverhältnis ergibt oder der Verschnitt vollständig verschlossen ist.

So können beispielsweise bei einer sechskantförmigen Kodierungsstruktur im Anschlussbereich der Filterpatrone im tankseitigen Anschlussstutzen, der zur Verbindung mit der Filterpatrone vorgesehen ist, unterschiedlich große Öffnungen als Bypass vorgesehen werden, die beim Aufstecken einer Filterpatrone winkelabhängig verschlossen werden. Die Bypassöffnungen werden dabei in einer Ausführungsform bevorzugt in der Dichtfläche angebracht, so dass durch eine entsprechend geformte Anschlussdichtung der Filterpatrone beim Einsetzen der Filterpatrone alle Öffnungen mit Ausnahme der als Bypassöffnung vorgesehenen Öffnung abgedichtet werden. In einer andern Ausführung ist z.B. auch eine ein Betätigungselement umfassende Verschnittvorrichtung vorstellbar, bei der durch eine Einsetz- und/oder Positionierungsbewegung für die Filterpatrone ein bestimmtes Verschnittverhältnis eingestellt werden kann, wie nachfolgend anhand eines Beispiels noch näher erläutert wird.

Die Verschnittmenge kann z.B. aber auch auf andere Weise unter Nutzung der Kodierungsstruktur eingestellt werden. So kann beispielsweise eine Kodierungsstruktur zugleich als mechanischer Mitnehmer dienen, um ein Verstellelement im Tankbereich durch die Filterpatrone mechanisch zu betätigen. Im Falle eines sechskantförmigen Anschlusssockels im Tankbereich könnte beispielsweise eine entsprechende Sechskantkontur der Filterpatrone dazu dienen, um ein verdrehbares Sockelelement zur Verschnittmengeneinstellung zu verdrehen. Die sechskantförmige Kodierungsstruktur der Filterpatrone hätte sodann nicht nur Kodierungsfunktion, sondern wäre zugleich ein mechanisches Betätigungselement, gewissermaßen nach Art eines Sechskantschlüssels.

In einer besonders bevorzugten Ausführungsform ist somit eine Kombination der oben beschriebenen Verschneidevorrichtung bzw. Verschnitteinstellung der Tank-Filterverbindung mit einer ebenfalls hierfür vorgesehenen Kodierstruktur vorgesehen. In einer besonders bevorzugten Ausführungsform der Kodierstruktur kann der Filteranschluss des Tanks mit weinigstens einer, wenigstens einen axialen Vorsprung umfassenden mechanischen Kodierungsstruktur versehen sein, die zu einer komplementären, dementsprechend wenigstens eine Ausnehmung und/oder wenigstens einen Vorsprung umfassenden Kodierungsstruktur der Filterpatrone passt.

Weiter ist auch eine polygone Verschlüsselungs- und/oder Ansehlussstruktur für den Tank-Filter-Anschluss vorgesehen, auf welche ebenfalls im nachfolgenden Text noch näher Bezug genommen wird. Das ergibt eine Kombination von in Bezug auf den Anschlusssockel axial ausgerichteter und polygoner Kodierungsstrukturen, ggf. zusätzlich noch in Kombination mit radial ausgerichteten Kodierungsstrukturen.

Die Strukturen am Filteranschluss des Tanks müssen somit nach einem Schlüssel-Schlossprinzip mit entsprechenden Anschlussstrukturen einer Filterpatrone wechselwirken, damit die Filterpatrone funktionsfähig in den Wassertank einsetzbar ist. Ein Maschinen- bzw. Tänkhersteller kann auf diese Weise dafür Sorge tragen, dass nur Filterpatronen zum Einsatz kommen, die einen zuverlässigen Betrieb der Maschine gewährleisten. Der Unterdruck zum Absaugen kann beispielsweise über eine Saugpumpe erzeugt werden. Zusätzlich zu derartigen axialen Vorsprüngen und/oder Ausnehmungen können auch in radialer Richtung des Filteranschlusselementes bzw. der Filterpatrone Verschlüsselungselemente vorgesehen werden.

Besonders vorteilhaft werden der Filteranschluss des Tanks und ein Anschlussstutzen der Filterpatrone so ausgebildet, dass diese einander umschließen. Insbesondere in einer solchen Ausführungsform können beispielsweise zur Ergänzung axial ausgerichteter Kodierungsstrukturen, z.B. zur weiteren Differenzierung der Verschlüsselungsstruktur, wie für verschiedene Anwendungsfälle und/oder Kunden auch solche in radialer Richtung, d. h. quer in Bezug auf die Achse des Anschlussstutzens der eingesetzten Filterpatrone angeordnet werden. Diese können ohne Weiteres mit unterschiedlichsten axialen Kodierungsstrukturen kombiniert werden, beispielsweise an der Stirnseite des Anschlussstutzens oder im Bereich des Tankbodens.

Vorzugsweise werden die Kodierungsstrukturen wenigstens teilweise zugleich als Fixierungselemente zur Befestigung der Filterpatrone ausgebildet. In diesem Fall werden den Kodierungsstrukturen bevorzugt hinterschneidend ausgeführt, so dass beispielsweise durch Drehen oder durch Klipsen eine Fixierung der Filterpatrone am Tankboden bzw. einem am Tankboden angebrachten Befestigungselement stattfinden kann, wobei selbstverständlich die entsprechenden Kodierungsstrukturen zueinander passen müssen, um einen einwandfreien Betrieb mit korrekter Filterpatrone sicherzustellen.

Kodierungsstrukturen können grundsätzlich auch als Betätigungsorgane im Bereich des Tankanschlusses herangezogen werden. So kann beispielsweise ein am Tank angebrachter Schaltmechanismus mit den Kodierungsstrukturen der Filterpatrone betätigt werden, der zur Signalisierung des durch die Position der Filterpatrone eingestellten Verschnittverhältnisses und/oder des korrekten Sitzes der Filterpatrone und/oder zur Erkennung des richtigen Typs von Patrone durch das zugehörige Gerät dienen kann. Eine solche Ausgestaltung der Kodierungselemente als Betätigungsorgan ist bei allen anderen Arten von Kodierungsstrukturen möglich.

Der Filteranschluss des Tanks ist mit einer Umfangskontur in Form eines Polygonzugs versehen. Eine derartige Formgebung ermöglicht darüber hinaus bei entsprechender Strukturierung der axialen, und sofern verwendet auch radialen Kodierungsstrukturen eine weitergehende Winkelkodierung für verschiedene Einsatzwinkelpositionen der Filterpatrone.

Vorzugsweise wird zu diesem Zweck eine drehsymmetrische Umfangskontur am Filteranschlusselement vorgesehen. Mit Hilfe einer drehsymmetrischen Ausgestaltung sind verschiedene, vorbestimme Winkelpositionen beim Einsetzen einer Filterpatrone realisierbar, denen bei Bedarf eine Zusatzfunktion je nach Wickelposition zugeordnet werden kann. Ein Beispiel für eine Umfangsform des tankseitigen Filteranschlusselementes nach den oben beschriebenen Ausführungsbeispielen wäre beispielsweise mit einer Sechskant-Querschnittskontur gegeben. Eine solche Kontur lässt z. B. sechs verschiedene Winkelpositionen einer dazu korrespondierenden Filterpatrone zu. Entsprechendes gilt für Vierkant-, Sechskant-, 8-kant oder dergleichen Strukturen.

Das tankseitige Filteranschlusselement ist dabei als Vorsprung mit entsprechendem Außenumfang ausgebildet. Ein Anschlussstutzen ist dementsprechend zum Aufstecken eines korrespondierenden Anschlüsselementes der Filterpatrone am Außenumfang mit der entsprechenden Umfangskontur versehen.

Vorteilhafterweise wird die so geformte Umfangsfläche zugleich als Dichtfläche ausgebildet. Die Dichtung kann somit in vorteilhafter Weise aus dem gleichen Material wie das Patronengehäuse hergestellt werden, vorzugsweise angespritzt. Auf diese Weise ist sichergestellt, dass nur eine Filterpatrone mit dazu korrespondierender Form der Dichtung für die Filterausgangsleitung funktionsfähig in den Tank eingesetzt und am tankseitigen Filteranschlusselement angeschlossen werden kann.

Eine Umfangsfläche, die wie oben beschrieben geformt ist, kann auch als Halterung für die Filterpatronen verwendet werden, die mit einem entsprechend geformten Halterungselement im Tankbereich korrespondiert. Auch in diesem Fall ist durch die Umfangsfläche eine Kodierungsstruktur realisiert.

Die Kodierungsstruktur kann, insbesondere dann, wenn sie zugleich die Dichtfläche bildet, eine in axialer Richtung sich erstreckende Querschnittsverjüngung, z.B. nach Art eines Pyramidenstumpfs aufweisen. Hierdurch wird ein leichteres, dichtes Aufstecken ohne größere Reibungskräfte ermöglicht.

Auf Seiten der Filterpatrone sind, wie bereits mehrfach angesprochen, die entsprechenden Kodierungsstrukturen vorzusehen, die mit den tankseitigen Kodierungsstrukturen korrespondieren. Ist die Dichtfläche des tankseitigen Filteranschlusses in die Formgebung der Kodierungsstrukturen eingeschlossen, so wird in einer besonderen Ausführungsform die Dichtung selbst als filterseitigen Tankanschlusselement mit der entsprechenden Formgebung versehen. So ist beispielsweise im Falle eines sechskantförmigen Querschnitts des tankseitige Filteranschlusselementes die Möglichkeit gegeben, als Gegenstück eine entsprechend sechskantförmige Dichtung vorzusehen. Diese kann dabei als Radialdichtung ausgeführt werden, die auf einen entsprechend geformten, im obigen Ausführungsbeispiel sechskantförmigen Vorsprung aufgesteckt wird.

Im Falle einer Querschnittsverjüngung wie oben angeführt wird dabei vorzugsweise auch die Dichtung entsprechend angepasst, so dass sie sich beim Aufstecken auf einen z.B. als Sechskant-Pyramidenstumpf ausgebildeten Vorsprung flächig anschmiegt.

In dieser Ausgestaltung ist nur eine Filterpatrone mit entsprechend geformter Dichtung funktionsfähig einsetzbar.

In einer besonderen Ausführungsform werden vom Boden des Tanks abstehende, am Außenumfang der Filterpatrone angreifende Fixierungsmittel vorgesehen, die zusätzlich eine Kodiereigenschaft haben können. Ein Beispiel für eine Fixierung ist das Verrasten oder Einklipsen der Filterpatrone in entsprechenden Rast- oder Klipselementen, die gegebenenfalls ebenfalls als Kodierstruktur ausgebildet sein können.

Eine weitere Kodiermöglichkeit des Tank-Filteranschlusses besteht durch die Veränderung der Ausrichtung der durch das filterseitige Tankanschlusselement verlaufenden Längsachse gegenüber einer durch das Filtergehäuse verlaufenden Längsachse, so dass diese zueinander beispielsweise einen bestimmten, insbesondere spitzen Winkel ausbilden. Hierzu kann das filterseitige Tankanschlusselement gegenüber dem Patronengehäuse vorzugsweise leicht geknickt ausgebildet sein. Patronen, die kein in ihrer Lage derart abgeknickt ausgerichtetes Anschlusselement aufweisen, können in einem entsprechend eng ausgebildeten Wassertank nicht funktionstüchtig eingesetzt werden. Ein weiterer Vorteil einer solchen Kodierung liegt darin, dass damit auch gewölbte und/oder gebogen ausgebildete Wassertanks mit vergleichsweise großer Längserstreckung betriebssicher und zuverlässig bestückbar sind, da durch die Abwinkelung der beiden Längsachsen zueinander eine entsprechend zuverlässig dichtende und fixierende Tank-Filter-Aufnahme durch eine optimale Ausrichtung des tankseitigen Filteranschlusselementes im Tank und eine von einer senkrechten Einführbewegung abweichende Einsetzbewegung für die Winkelpatrone realisierbar ist.

Gegebenfalls können hierzu an der Filterpatrone und/oder am Tank weitere Führungselemente zur zuverlässigen Verbindung des tankseitigen Filteranschlusselementes mit dem filterseitigen Tankanschlusselement vorgesehen sein. Insbesondere gut eignet sich hierfür z.B. tankseitig vorgesehene in der Einführrichtung einen sich verjüngenden Querschnitt ausbildende Rippen, durch welche das filterseitige Anschlusselement und/oder das Filtergehäuse und/oder eine vom Filtergehäuse vorstehende Führungsstruktur, wie z.B. ein Anschlussring oder dergleichen, beim Einsetzen der Filterpatrone führen. Eine solche filterseitige Führungsstruktur kann als Umfangsfläche ausgebildet sein, sie kann auch schlitzförmig, komplementär zu den oben beschriebenen Rippen ausgebildete Konturen und/oder eine andere geeignete Struktur aufweisen.

Bei einer Rippen-Schlitz-Kodierung ist wiederum eine weitere Kodiermöglichkeit durch in Draufsicht betrachtet unterschiedliche Winkelkodierung für einzelne oder mehrere solche komplementärer Elemente möglich. Nur wenn die Schlitz-Rippenkombination und die abgewinkelte Tank-Filteranschlussstruktur zusammenpassen kann eine entsprechende Filterpatrone betriebsgemäß eingesetzt werden.

Diese hier beschriebene Führungs- und Kodierstruktur ist aber durchaus auch für nicht abgewinkelt ausgebildete Filteranschlusselemente mit der gleichen Wirkungsweise einsetzbar.

Eine zusätzliche Führungs- und/oder Kodierfunktion kann durch an der Filterpatrone stirnseitig ausgebildete, vorstehende Spitzen oder Ausnehmungen realisiert werden, welche in entsprechend komplementär ausgeformte, tankseitige Kodier- und/oder Führungsstrukturen eingreifen können.

Zur Realisierung einer Verschnittvorrichtung können aber auch entsprechende Öffnungen und/oder Kanäle in der Filterpatrone ausgebildet sein, die z.B. mit und/oder ohne Wechselwirkung mit einem tankseitigen Verschnittelement einen Verschnitt für das durch die Filterpatrone gefilterten Wassers ermöglichen. In entsprechender Weise gilt dies auch bei der Verwendung eines gegebenenfalls zwischen tank- und filterseitigem Anschlusselement zwischengefügtem Anschluss und/oder Verlängerungselement, wie z.B. einem Adapter mit gleicher und/oder anderer Anschluss- und/oder Kodier- und/oder Fixier- und/oder Dichtstruktur.

Um sicherzustellen, dass zur Umgehung der erfindungsgemäßen Kodierung der Tank einer Maschine gegen einen nicht zugelassenen Tank ohne Kodierungsstrukturen für den Einsatz nicht zugelassener Filterpatronen ausgetauscht werden, empfiehlt es sich, die Schnittstelle zwischen Tank und Maschine ebenfalls mit Kodierungsstrukturen zu versehen, die einem der oben beschriebenen Ausführungsbeispiele gleichen können. Hierbei sind die maschinenseitigen sowie die tankseitige Anschlusselemente entsprechend zu kodieren.

Die Erfindung ist bei allen wasserführenden Geräten, insbesondere bei wasserführenden Haushaltsgeräten oder Geräten zur Aufbereitung von Speisen und/oder Getränken vorteilhaft einsetzbar, wie Getränkeautomaten, insbesondere Kaffeeautomaten, Trinkwasserspender, Koch- und Backgeräte, Dampf- und/oder Hochdruckreiniger, Luftreiniger und - konditionierer oder dergleichen, die einen entsprechenden Wassertank aufweisen.

Verschiedene Ausführungsbeispiele sind in der Zeichnung dargestellt und werden an Hand der Figuren nachstehend näher erläutert.

Im Einzelnen zeigen
- Fig. 1: eine Seitenansicht auf einen Bodenausschnitt eines Wassertankes mit eingesetzter Filterpatrone,
- Fig. 2: eine Draufsicht auf einen Bodenausschnitt eines Wassertanks gemäß Figur 1,
- Fig. 3: eine Draufsicht auf das Tankanschlusselement einer Filterpatrone gemäß Figur 1,
- Fig. 4: eine perspektivische Darstellung einer Filterpatrone gemäß Figur 1,
- Fig. 5 und 5a: zwei Ausführungsvarianten mit winkelabhängiger Verschnittmengeneinstellung,
- Fig. 6: beispielhaft und schematisch einen filterseitigen und einen geräteseitigen Tankanschluss, jeweils in Kombination mit einem entsprechend ausgebildeten Adapterstück und die
- Fig. 7-56: weitere mögliche Ausführungsformen in unterschiedlichen Ansichten beispielhaft und schematisch dargestellt.

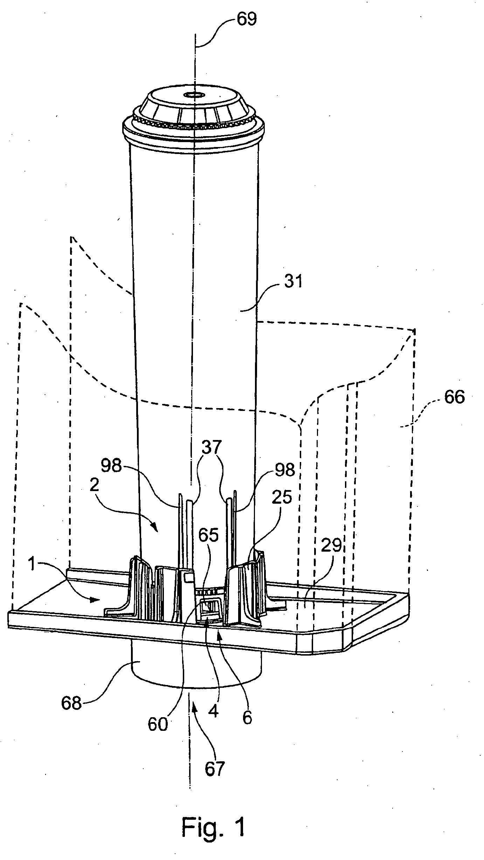

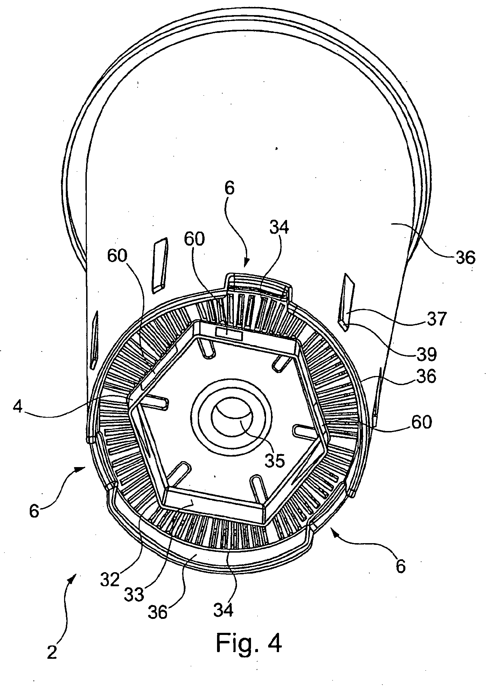

Figur 1 zeigt Anschlusselemente 1,2 eines ausschnittsweise, durch gestrichelte Linien schemenhaft dargestellten Tanks 66 sowie einer zugehörigen Filterpatrone 31. Tankseitig ist ein Anschlusssockel 1 dargestellt, der fest mit dem Boden 29 des zugehörigen Tanks 66 verbunden, beispielsweise verschweißt, verklebt oder auf sonstige Weise befestigt wird. In diesen Anschlusssockel 1 ist das Tankanschlusselement 2 der Filterpatrone 31 eingesetzt. Das filterseitige Tankanschlusselement 2 ist in Fig. 4 besser zu erkennen und umfasst einen Anschlussstutzen 4, der in das Patronengehäuse 36 übergeht. In der Ausführungsvariante gemäß den Figuren 1 und 4 gelangt das zu filternde Wasser über seitliche Schlitze 6 und anschließend über patronenbodenseitig angeordnete Durchlassöffnungen 34 in das Innere des Patronengehäuses 36 und passiert anschließend ein nicht näher dargestelltes Filterbett. Die Filterstrecke kann dabei im Aufstrom, im Abstrom oder in Kombination mit beiden Strömungsführungen ausgebildet sein. Durch das zentrale Abflussrohr 35 gelangt das gefilterte Wasser letztendlich über den tankseitigen Geräteanschluss 68 in den Sauganschluss 67 Wassertanks 66.

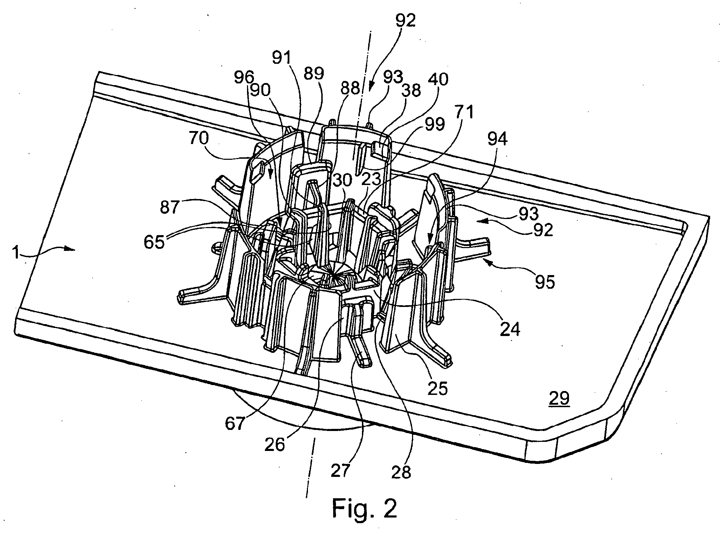

Erfindungswesentliche Details werden nun unter Bezugnahme auf die Figuren 1 und 2 nachfolgend näher dargelegt. Um ggf eine Anpassung an bestimmte Anwendungsfälle und/oder die Qualität des zu filternden Wassers bzw. des durch den Filter hindurch gelaufenen, gefilterten Wassers ermöglichen zu können, wird erfindungsgemäß das Vorsehen einer Verschneidevorrichtung 60, 65; 136.1, 160, 165; 336.1, 360, 365 vorgeschlagen. Hiermit kann z.B. ungefiltertes und/oder anderweitig aufbereitetes Wasser dem aus dem Filter 31 austretenden gefilterten Wasserstrom beigemengt werden. Dies kann beispielsweise dann sinnvoll sein, wenn der Filter eine bessere Filterwirkung aufweist, als die für einen einwandfreien Betrieb des mit diesem Tank betriebenen Gerätes erforderlich ist oder wenn beispielsweise das in den Tank eingefüllte Wasser eine sehr gute Qualität aufweist.

Um eine Feinabstimmung auf bestimmte Anwendungsfälle und/oder bestimmte Wassergüten für den Betrieb des Gerätes vornehmen zu können, wird in weiter vorteilhafter Weise vorgeschlagen, die Verschneideeinrichtung derart verstellbar bzw. einstellbar auszubilden, dass eine Einflussnahme auf den wirksamen Querschnitt des ungefiltert und/oder anderweitig aufbereitet dem gefilterten Wasserstrom zugemengten Bypassstroms möglich ist. In der Figur 1 sind hierzu Elemente 6, 60 und 65 der Verschneidevorrichtung im Verbindungsbereich des Tank-Filter-Anschlusses 1,2 so zueinander ausgerichtet, dass sie einen flüssigkeitsleitenden Kanal ausbilden, und dass ein direkter Durchfluss von im Tank 66 befindlichem Frischwasser in den zentralen Ablaufbereich des Sauganschlusses 67 möglich ist.

Die diesbezüglichen, filterseitigen Verschnittelemente des Tankanschlusses sind in der Figur 4 als in der Gehäusewand 36 ausgebildete Schlitze 6 und in einer hier beispielhaft als Sechskant dargestellten Formdichtung ausgebildete Durchlässe 60 dargestellt.

Zur Realisierung einer Einstellmöglichkeit des wirksamen Verschnitt-Querschnitts sind hier drei unterschiedliche große Aussparungen 60 als Frischwasserdurchlauföffnungen dargestellt. Die drei übrigen der insgesamt sechs Umfangsflächen der als Sechskant ausgebildeten, polygonen Formdichtung 32 weisen dem gegenüber, hier wiederum beispielhaft, keine Aussparungen 60 auf. Damit kann z.B. eine sogenannte winkelabhängige Bypasssteuerung entsprechend der Ausrichtung der Patrone beim Einsetzen in den Tank realisiert werden. Je nach dem, in welcher Winkelstellung die Filterpatrone eingesetzt wird, kann ein entsprechend großer aktiv wirksamer Bypassquerschnitt eingestellt werden. Entsprechend der Darstellung in der Figur 4 können hierdurch die drei sich in ihrer Größe und Position unterscheidenden Durchlassöffnungen 60 verschiedene Bypassöffnungen 65 im tankseitigen Filteranschluss Stutzen 23 (Figur 2) zur Einstellung des Verschnittverhältnisses freigeben bzw. verdecken.

Wiederum beispielhaft sind hierzu in der Figur 2 zwei in ihrem wirksamen Durchlassquerschnitt unterschiedlich große Bypassöffnungen 65 in einer Seitenwand des Anschlusssockels 23 eingezeichnet, die je nach Überdeckung einer der drei zur Figur 4 beschriebenen Aussparungen 60 freigegeben bzw. verschlossen werden. Die hier beschriebene Schnitteinstellung ist lediglich beispielhaft und kann durchaus durch eine Kombination mit weiteren Aussparungen 60 und/oder Bypassöffnungen 65 in den gleichen und/oder weiteren Seitenwänden der hier ebenfalls beispielhaft als Sechskant dargestellten, polygonförmigen tank- und filterseitigen Anschlusselemente 1,2 feiner abgestuft dimensioniert werden.

Weitere mögliche Ausführungsformen bezüglich einer Verschneidevorrichtung bzw. einer Verschnitteinstellung werden nachfolgend unter Bezugnahme weiterer Ausführungsbeispiele noch erläutert.

Ein tankseitige Geräteanschluss 68 ist aus Vereinfachungsgründen hier nur beispielhaft als rund ausgeformter Anschlussstutzen dargestellt. Wie der Anschlusssockel 1 des tankseitigen Filteranschlusses kann aber auch der tankseitigen Geräteanschluss 68 Kodierungsstrukturen aufweisen, um sicherzustellen, dass nur zulässige Anschlussverbindungen hergestellt werden können, also sowohl mit einer für den Tank zu verwendeten Filterpatrone als auch, sofern gewünscht, mit einem für die Verwendung dieses Tanks geeigneten Gerät. Der Übersichtlichkeit halber wird von einer grafischen Darstellung solcher Details für den Geräteanschluss 68 abgesehen und hinsichtlich der hierzu möglichen Ausführungsformen von Kodierungen auf die bezüglich des Tanks-Filter-Anschlusses beschriebenen Ausführungsformen verwiesen, die in vollem Umfang auch für den Tank-Geräteanschluss Gültigkeit haben.

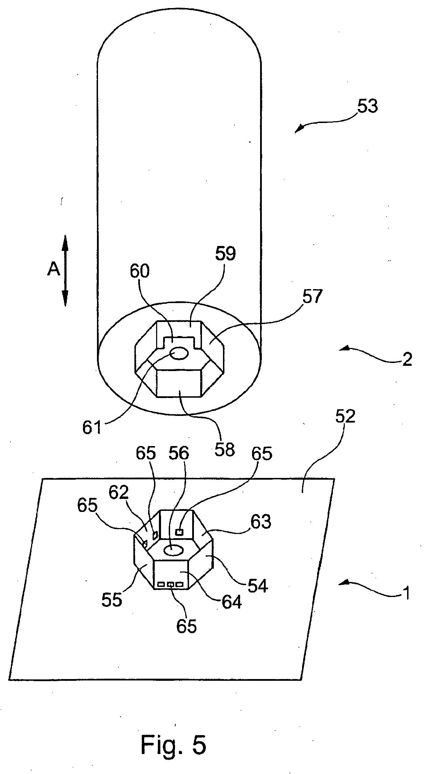

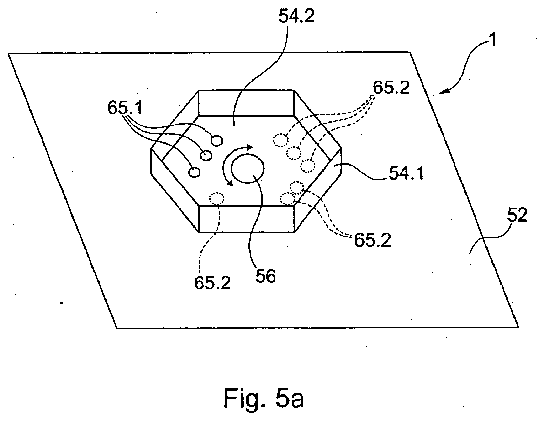

Eine weitere und/oder zusätzlich mögliche Ausführungsform einer tankseitigen Filterpatronenkodierung ist in den Figuren 2 und 5 als tankseitiges Filteranschlusselement gezeigt, dessen Umfangsfläche 33 eine in Bezug auf den Filteranschlussstutzen 2 axial ausgerichtete Kodierstruktur mit einem polygonförmigen Querschnitt aufweist. In diesem speziellen Ausführungsbeispiel ist das Polygon stellvertretend für eine Vielzahl anderer möglicher Ausführungsformen von Tank-Filter-Anschlüssen als Sechseck ausgebildet.

Weitere Details zu einer so möglichen Kodierung zwischen einem tankseitigen Filteranschlusselement 1 und einem filterseitigen Tankanschlusselement 2 werden nachfolgend wiederum unter Bezugnahme auf die Figur 2 beschrieben. Das hierbei beispielhaft als Sechskant ausgebildete, tankseitige Filteranschlusselement 23, in der Form eines Anschlusssockels 23, ist zur Realisierung seiner polygonen Kontur als axialer Vorsprung 23 mit einem polygonförmigen Außenumfang 24 ausgebildet. Die komplementäre Patronenanschlussstruktur liegt nach Aufstecken der Filterpatrone vorzugsweise formschlüssig und dichtend in einer ersten möglichen Befestigungsform mit ihrem Innenumfang 33 am Außenumfang 24 die Filterpatrone 31 fixierend und abdichtend an.

In bevorzugter Weise umschließen sich hierbei der tankseitige Filteranschlusssockel 23 und der Anschlussstutzen 4 der Filterkartusche. Bei vollständiger Umschließung ist neben dem zusätzlich stabilisierenden Effekt der umlaufenden Berührungsflächen zwischen diesen beiden axial strukturierten Elementen auch eine einwandfreie, großflächige Abdichtung zwischen der Frischwasserseite im Inneren des Tanks 66 und der an der Anschlussöffnung 35 gelegenen Seite der Filtervorrichtung zur Geräteversorgung über den Sauganschluss 67 gewährleistet.

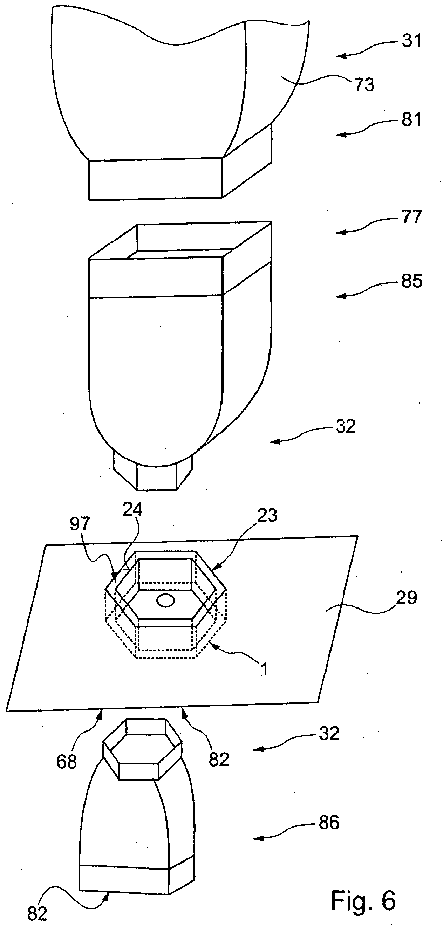

Bei einer komplementären nicht erfindungsgemäßen Ausführungsform entsprechend der Figur 6 kann in Umkehrung dieser Aufbauweise das tankseitigen Filteranschlusselement 23 als komplementäre Struktur in der Form einer axialen Ausnehmung mit einem entsprechenden Innenumfang ausgebildet sein, an welcher wiederum die Dichtfläche 33 der Filterpatrone vorzugsweise formschlüssig und flächig dichtend anliegen kann, wobei hierdurch wiederum gleichzeitig eine ausreichende Fixierung der Filterpatrone 31 am Tank 66 gewährleistet ist.

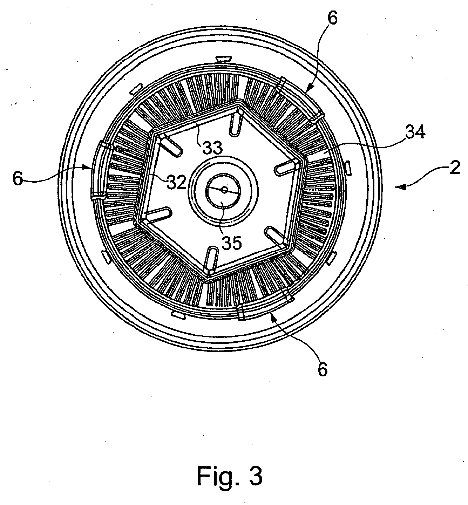

Die eingesetzte Filterpatrone 31 ist mit einer Formdichtung 32 versehen, die dementsprechend ebenfalls einen Sechskantquerschnitt aufweist (vergleiche Figur 3). Die Innenfläche der Formdichtung 32 bildet dabei die Dichtfläche 33.

In Figur 3 sind darüber hinaus die Eintrittsschlitze 34 zur Wasserzufuhr in die Filterpatrone sowie eine zentrale Abflussöffnung 35 für die Wasserabfuhr erkennbar. Von der Darstellung von Bypassöffnungen in der Formdichtung 32 wurde hier aus Gründen der Übersichtlichkeit unter Verweis auf die Figur 4 abgesehen.

Über die Formdichtung 32 mit entsprechend geformtem Anschlusssockel 23 umfasst die dargestellte Ausführungsform noch weitere Kodierungsstrukturen. So sind außen am Filterpatronengehäuse 36 Schnappelemente 37 (vgl. Figur 4) angeformt. Die Schnappelemente 37 sind in entsprechende Aufnahmen 38 der Außenschalen 25 einführbar. Beim Aufsetzen der Unterkante 39 am Anschlag 40 der Aufnahmen 38 ergibt sich ein Druckpunkt. Bis in diese Position lässt sich die Filterpatrone 31 leicht ohne Gegenwiderstand in der richtigen Winkelposition aufsetzen. In dieser Winkelposition befindet sich die Formdichtung 32 ausgerichtet gegenüber der Dichtfläche 24 des Anschlusssockels 23, so dass sie in axialer Richtung weiter einführbar ist. Durch weiteres Eindrücken in axialer Richtung schnappt das Schnappelement 37 über den Anschlag 40, wobei die Formdichtung 32 entlang der Dichtfläche 24 eingedrückt wird. Durch die Abschrägung der Schnappelemente 37 und die entsprechende Innenform der Außenschalen 25 wird die Filterpatrone 31 in den Außenschalen 25 fixiert. Weitere axiale Fixierungselemente sind in dieser Ausführungsform nicht mehr erforderlich.

Fig. 5 zeigt eine weitere schematisch dargestellte, erfindungsgemäße Ausführungsform mit winkelabhängig einstellbarer Verschnittmenge. Der Tankboden 52 ist nur ausschnittsweise im Anschlussbereich der Filterpatrone 53 dargestellt. Der Tankboden 52 umfasst einen sechskantförmigen Anschlusssockel 54, der nach oben hin zur Verbesserung der Abdichtwirkung gegenüber einer rein senkrechten Ausrichtung der Sockelwände und/oder als weitere Kodierstruktur nach Art eines Pyramidenstumpfes leicht konvergiert. Diese Querschnittsverjüngung ist in der perspektivischen Darstellung kaum zu erkennen.

Die Außenflächen 55 des Anschlusssockels dienen zugleich als Dichtfläche, um die Abflussleitung 56 bei aufgesetzter Filterpatrone 53 ganz oder teilweise gegenüber dem Innenraum des Tanks abzudichten.

Die Filterpatrone 53 weist eine zum Anschlusssockel 54 korrespondierend kodierte sechskantförmige Dichtung 57 auf. Die einzelnen Wände 58 sind mit Ausnahme einer Wand 59 in axialer Richtung A gleich lang ausgebildet. Die Wand 59 ist mit einer unterseitigen Aussparung 60 versehen, deren Funktion nachfolgend näher erläutert wird. Im Inneren der Dichtung 57 ist der Ausgang 61 aus der Filterpatrone 53 erkennbar, durch den das gefilterte Wasser in die Abflussleitung 56 gelangt.

Verschiedene Sockelwände 62, 63, 64 des Anschlusssockels 54 sind mit einer unterschiedlichen Anzahl von Bypassöffnungen 65 versehen. Die Bypassöffnungen 65 sind so angeordnet, dass sie von den länger ausgebildeten Dichtungswänden 58 beim Aufstecken der Filterpatrone 53 dicht verschlossen werden. Lediglich dort, wo die Wand 59 mit Aussparung 60 zum Einsatz kommt, können die Bypassöffnungen 65 geöffnet bleiben, so dass über die Aussparung 60 gefiltertes Wasser unmittelbar aus dem Tank zum Bereich der Abflussleitung 56 gelangt.

Wie anhand des dargestellten Ausführungsbeispiels unschwer erkennbar ist, wird durch die Winkelanordnung der Filterpatrone, d.h. mit der Auswahl der Sockelwand 62, 63, 64, an der die Aussparung 60 angesetzt wird, die Größe des freien Querschnitts der Bypassöffnungen 65 eingestellt.

In der vorliegenden Ausführungsform summieren sich die Querschnittsöffnungen der mehrfach angebrachten Bypassöffnungen 65. In anderen Ausführungsformen können auch einfach unterschiedlich große Bypassöffnungen 65 vorgesehen werden. Durch die unterschiedlichen Querschnitte einzelner Bypassöffnungen 65 oder in der Summe mehrerer Bypassöffnungen 65 an einer Sockelwand, beispielsweise der Sockelwand 64, ergeben sich unterschiedliche Anteile an ungefiltertem Wasser, die gefilterten Wasser beigemengt werden. Es ergibt sich somit eine Verschnitteinstellung, die abhängig ist von der Winkelposition der Filterpatrone 53.

Eine weitere, mögliche Ausführungsform einer Verschnitteinstellung kann z.B. durch die Ausbildung eines durch die Filterpatrone betätigbaren Mitnehmerelementes in der Form eines in seiner Position drehbar verstellbaren Anschlusssockels 54.1 entsprechend der Dartellung in der Figur 5a realisiert werden. Der Boden 54.2 des drehbaren Anschlusssockels 54.1 weist hier beispielhaft drei Bypassöffnungen 65.1 auf und kann je nach Drehposition gegenüber dem Tankboden 52 so angeordnet werden, dass im Tankboden 52 angeordnete, komplementäre Bypassöffnungen 65.2 fluidleitend freigegeben bzw. verschlossen werden.

In dieser Darstellung sind rein beispielhaft vier unterschiedliche Einstellungen dargestellt, die gezeigte Drehposition mit verschlossenem Bypass und drei weitere Positioniermöglichkeiten, mit der Freigabe von jeweils einem, zwei oder allen drei Bypasslöchern 65.1 durch Übereinstimmung in ihrer Lage mit den entsprechenden Bypasslöchern 65.2. Eine mögliche Trennvariante zwischen den mit dem tankseitigen Frischwasseranschluss verbundenen Bypasslöchern 65.1 und der zentral angeordneten Abflussleitung 56 wäre die Anordnung einer dazwischen liegenden Dichtung, insbesondere und vorzugsweise einer Axialdichtung, die sich zwischen der Stirnseite des filterseitigen Tankanschlusselementes und dem Boden 54.2 des Anschlusssockels 54.1 dichtend erstreckt. Denkbar sind durchaus aber auch andere ggf. auch zusätzliche trennende und/oder dichtende Elemente zwischen der Frischwasserseite und der Seite des gefilterten Wassers.

Neben den dargestellten Ausführungsformen sind ohne Weiteres auch weitere Ausführungsformen und/oder Kombinationen mit dieser Ausführungsform denkbar. So können beispielsweise die bisher beschriebenen Kodierungsstrukturen in der Form von beispielhaft dargestellten, sechskantigen Polygonen durch andere Kodierstrukturen, wiederum beispielhaft z. B. in der Form von Vierkantpolygonen ergänzt und/oder kombiniert werden, wie sie beispielsweise durch eine Ausführungsform der Figur 6 zusätzlich beispielhaft gezeigt ist.

Die Figur 6 zeigt schließlich neben einer im Vergleich zu den Ausführungsformen in den Figuren 1 bis 4 beschriebenen Sockel-Filterverbindung in der Form eines axialen Vorsprungs 23 am tankseitigen Filteranschlusselement 23 eine komplementäre Form als im Tankboden 29 ausgebildete axiale Ausnehmung 23, bei der sinngemäß alle zu der ersten Ausführungsform beschriebenen Kodierungsmöglichkeiten auch hier realisiert werden können, und zwar gleich.

Als zweites wesentliches Merkmal zeigt die Figur 6 die Möglichkeit der Verwendung von Adaptern 85, 86. Der Adapter 85 ist rein beispielhaft zum Anschluss einer ebenfalls beispielhaft dargestellten Filterpatrone 73 an einen tankseitigen Filteranschluss 1 dargestellt, wobei die Ausführungsform des Filteranschlusses 1, insbesondere seines Sockels 23, wie oben bereits dargelegt, als axial vorstehender Sockel realisiert sein kann. Das Gleiche gilt sinngemäß für den tankseitigen Geräteanschluss an der Unterseite des Tankbodens 29. Aufgrund der sinngemäß gleichen Funktionalitäten sind auch die einzelnen Elemente mit den gleichen Nummerierungen versehen, wie zum Teil bereits oben in der Beschreibung verwendet. Von der Darstellung von Details zur Verschneidevorrichtung wurde aus Übersichtsgründen unter Verweis auf die Beispiele in den Figuren 5 und 5a abgesehen, derartige Ausführungen sind aber auch hier in entsprechender Weise möglich.

Die dargestellten Ausführungsvarianten zeigen auch die unterschiedlichsten Kodierungsstrukturen, die erfindungsgemäß vorzusehen sind. In jedem Fall ist gewährleistet, dass nur entsprechend angepasste Filterpatronen mit Schlüsselfunktion in die entsprechenden tankseitigen Filteranschlüsse passen.

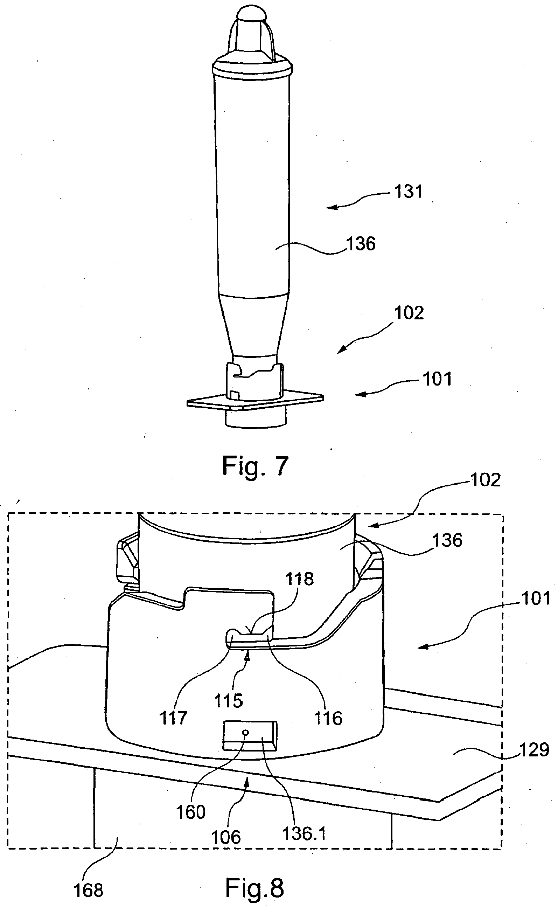

Nachfolgend werden noch weitere, mögliche Ausführungsformen unter Bezugnahme auf die Figuren 1 bis 20 beschrieben. In den Figuren 7 bis 14 wird ein nicht erfindungsgemäßer Tank-Filterpatronen-Anschluss mit Verschnitteinstellungselementen 106, 136.1, 160 und 165 sowie mit in Bezug auf eine Längsachse des Anschlusses axial ausgerichteten Verschlüsselungs- bzw. Kodierungsstrukturen in Kombination mit einer weiteren Ausführungsform einer Formschlussdichtung beschrieben. Der Einfachheit halber werden bereits zu den zuvor beschriebenen Ausführungsformen entsprechende Merkmale mit der gleichen Grundnummerierung, jedoch um die Nummer 100 erhöht bezeichnet.

Demnach zeigt die Figur 7 einen nicht erfindungsgemäßen tankseitigen Anschlussstutzen 104 in welchem eine Filterpatrone 131 über einen filterseitigen Tankanschlussstutzen 101 angeschlossen ist. Entsprechend der Figur 8 steckt das Gehäuse 136 der Filterpatrone 131 vollkommen im tankseitigen Anschlussstutzen 101. Das stirnseitige Ende des Patronengehäuses 136 ist in der Figur 8 hinter einem Durchlassschlitz 106 für den Zulauf des im Tank befindlichen Frischwassers in den Innenbereich des Anschlussstutzens 101 dargestellt. Zentral in diesem sichtbaren Abschnitt des Filterpatronengehäuses 136 ist eine Aussparung 160 in der Form einer Bohrung dargestellt, die die Funktion eines Verschnittelementes inne hat, und Frischwasser durch sie hindurch und durch eine weitere, dahinter angeordnete, hier nicht sichtbare Öffnung 165 in den Filterauslassbereich 135 strömen lässt, in welchem das von der Patrone gefilterte Wasser in den Tankauslass 168 geleitet wird. Die Verschnitteinstellung kann auch hier z.B. über entsprechende Drehpositionen verändert werden, sofern eine Ausführung mit verstellbarem, wirksamem Verschneidequerschnitt vorgesehen ist. In einer einfachen Ausführung, wie dargestellt, ist auch eine feste Verschnitteinstellung möglich, die z.B. von einer Drehposition unabhängig ist.

Als eine von mehreren möglichen Fixierung der Filterpatrone 131 am tankseitigen Anschlussstutzen 101 sind an diesem eine Aufnahme-Führungsbahn 115 zur Aufnahme eines an der Filterpatrone ausgebildeten, radialen Vorsprungs 116 dargestellt. Beide weisen ein jeweils zum Anderen komplementäres Rastelement 117 und 118 auf, die nach einer entsprechenden Drehbewegung beim Einsetzen des filterseitigen Tankanschlusselementes 102 nach Überwindung entsprechender Spannkräfte des etwa flügelartig vom tankseitigen Anschlussstutzen abstehenden Teils schnappend ineinander einrasten. Dadurch, dass das Rastelement 117 in seinem vorderen Bereich eine Verdickung aufweist, bezogen auf eine für den Einsatz der Filterpatrone erforderliche Drehbewegung, der eine entsprechend groß ausgesparter Bereich im Rastelement 118 gegenübersteht, kann damit eine positionssichernde Verrastung der beiden Anschlusselemente miteinander gewährleistet werden.

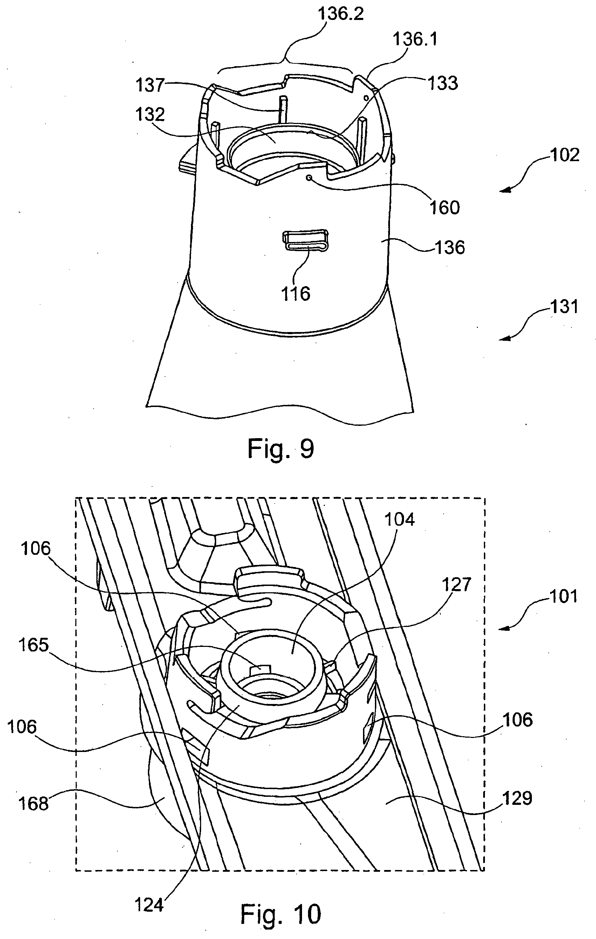

In der Figur 9 ist der nicht erfindungsgemäße filterseitige Tankanschlussbereich in der Filterpatrone 131 dargestellt, wobei das Gehäuse 136 im vorderen, stirnseitigen Bereich einem gegenüber Aussparungen 136.2 vorstehenden Vorsprung 136.1 aufweist, jeweils die bereits oben beschriebene Durchlassöffnung 160 als Verschnittelement umfassend. Die Vorsprünge 136.1 des Filterpatronengehäuses 136 stellen ihrerseits axial ausgerichtete Kodierstrukturen dar, die einen betriebsgemäßen Einsatz der Filterpatrone im betreffenden Tankanschlusselement ermöglichen. Sobald eines dieser axialen Ködierungs- bzw. Verschlüsselungselemente in der Form der Gehäuseüberstände 136.1 fehlt, fließt im Tank befindliches Frischwasser,direkt durch die einen entsprechend großen Querschnitt aufweisende Durchlassöffnung 106 und die dahinter liegende, ebenfalls einen entsprechend großen Querschnitt aufweisende weitere Bypässöffnung z5 direkt in den Geräteansaugbereich 168.

Eine gegebenenfalls eingesetzte Filterpatrone ohne entsprechende axial vorstehende Gehäuseflügel 136.1 wäre in diesem Fall aufgrund des großen Durchflusses von Frischwasser in den Zulaufbereich des Geräteanschlusses ohne Filterwirkung, wie dies deutlich aus der Figur 10 zu erkennen ist.

Die hier beschriebene Ausführungsform weist jeweils drei axial ausgerichtete Kodierstrukturen 136.1 am Filtergehäuse 136 auf, die insbesondere bevorzugt um 120° versetzt stirnseitig am Umfang des filterseitigen Tankanschlusselementes 102 angeordnet sind, wie aus der Figur 9 gut entnehmbar. Die komplementären Anschlusselemente des tankseitigen Filteranschlusses 101 zeigt die Figur 10.

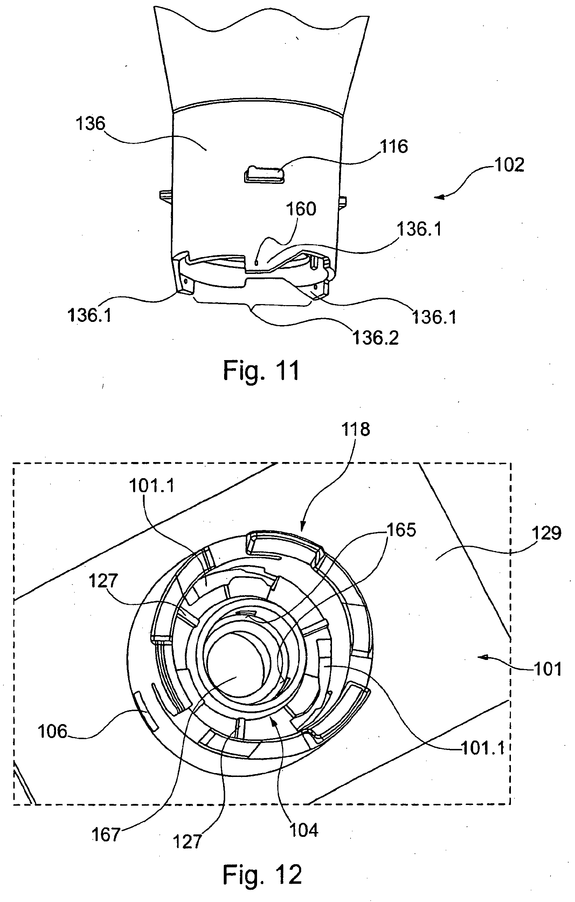

Die Figuren 11 und 12 zeigen zwei weitere Ansichten dieser nicht erfindungsgemäßen Ausführungsform eines Tank-Filter-Anschlusses 101, 102. Am tankseitigen Filteranschluss 101 sind hierbei drei axiale Ausnehmungen 101.1 dargestellt, die im Tankboden 129 vertieft eingelassen sind um die drei komplementären Gehäuseüberstände 136.1 der Filterpatrone aufnehmen zu können. Somit sind hier wiederum axiale Vorsprünge 136.1 bzw. komplementäre axiale Vertiefungen 101.1 als Verschlüsselungs- bzw. Kodierstruktur zur Verhinderung nicht für den Einsatzzweck vorgesehener Filterpatronen dargestellt.

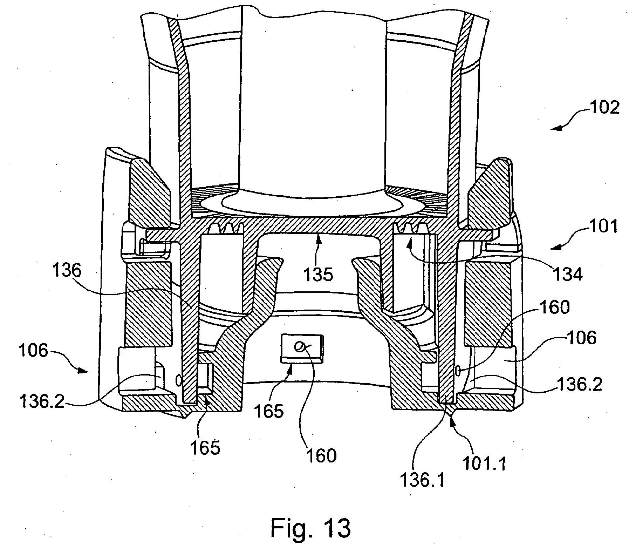

Die Figur 13 zeigt einen Schnitt durch ein nicht erfindungsgemäßes tankseitiges Filteranschlusselement 101 in welchem ein filt.erseitiges Tankanschlusselement 102 eingesetzt ist. Im unteren, bodenseitigem Bereich des tankseitigen Filteranschlusselementes 101 sind hierbei die durch die drei Gehäuseüberstände 136.1 im Wesentlichen verschlossenen Bypass- bzw. Kurzschlussöffnungen 165 zur erkennen. Bei eingesetzter Filterpatrone wird die Bypassfunktion realisiert, so dass eine bestimmte Menge an Frischwasser dem von der Filterpatrone gefilterten und durch den Auslass 135 austretenden Filterwasser beigemengt wird. Bei fehlender Patrone ist diese axiale Kodierstruktur wirkungslos bzw. kann dieser tankseitige Filteranschluss nur zur ungefilterten Durchleitung des im Tank befindlichen Frischwassers genutzt werden.

Bei eingesetzter Patrone kann durch die Aussparungen 136.2 durch den Schlitz 106 eintretendes Frischwasser im Inneren des Anschlussstutzens 104 aufsteigen und durch die Eintrittsschlitze 134 in die Filterkammer der Filterpatrone eintreten, durch das Filter hindurch fließen und aus der Filteraüslassöffnung 135 in die Ansaugleitung des Tanks bzw. des Gerätes weitergeleitet werden.

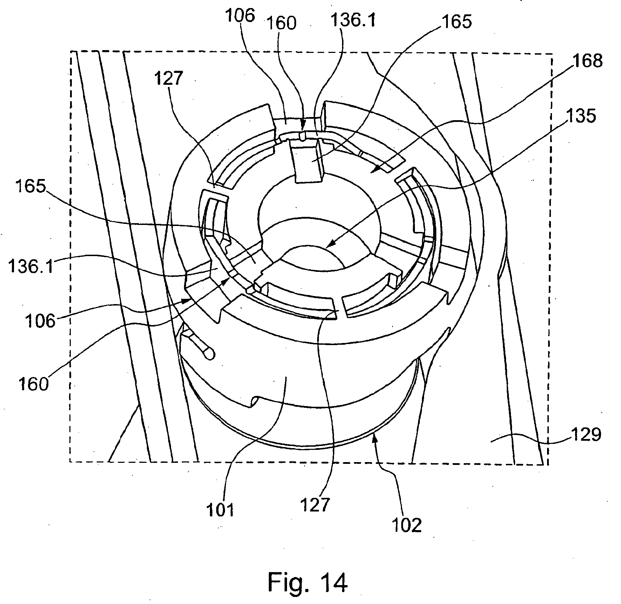

Die Figur 14 zeigt eine weitere Schnittansicht durch den Tankboden 129 und einen damit verbundenen nicht erfindungsgemäßen tankseitigen Filteranschluss 101 sowie einen darin eingesetzten filterseitigen Tankanschluss 102 von der Bodenseite des Tanks her betrachtet. Darin sind die Bypass- bzw. Kurzschlussleitungen 106 und 165 sehr gut zu erkennen, die eine entsprechende Durchleitung des ungefilterten Frischwassers in den Tankablaufbereich 168 zeigen. Bei, wie im gezeigten Beispiel, eingesetzter Patrone mit korrekter axialer Kodierung erfolgt ein entsprechend vorgesehener Verschnitt des zu filternden Frischwassers durch die in den flügelartig vorstehenden Gehäuseabschnitten 136.1 ausgebildeten Bypasslöcher 160.

Anstelle der hier beispielhaft gezeigten, 120° versetzten drei axialen Kodierstrukturen können vier, fünf oder beispielsweise sechs solche Strukturen ausgebildet sein. Der Abstand der einzelnen komplementären axialen Kodierstrukturen kann dabei entweder symmetrisch oder aber auch unsymmetrisch ausgebildet sein.

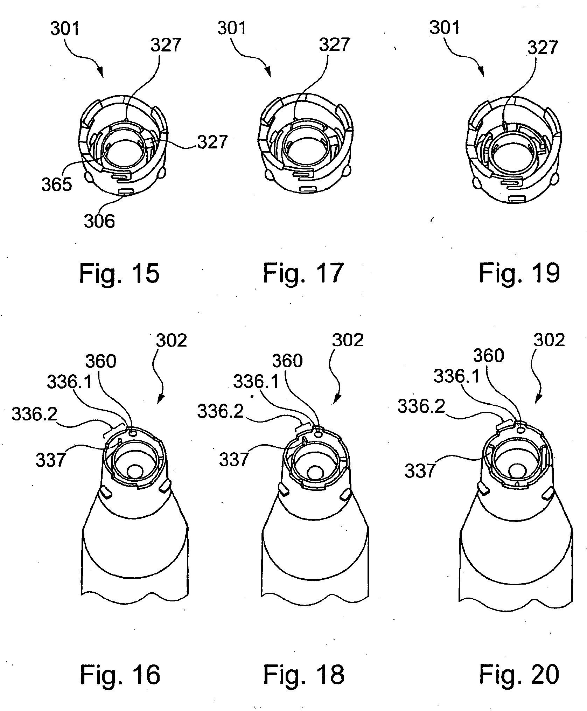

Die Figuren 15 bis 20 zeigen weitere nicht erfindungsgemäße Ausführungsformen von tankseitigen Filterausschlusselementen und filterseitigen Tankanschlusselementen, die mit Verschnittstrukturen 306, 336.1 und 365 einer Verschnittvorrichtung im Sinne obiger Ausführungen zu den Nummernkreisen 0 bis 99 und 100 aufwärts im Wesentlichen bereits beschrieben sind. Dementsprechend sind der Einfachheit halber auch hier, bereits zu den zuvor beschriebenen Ausführungsformen beschriebene Merkmale mit der gleichen Grundnummerierung bezeichnet, hier jedoch um die Nummer 300 erhöht. Auch sie weisen axial kodierte Anschlussstrukturen auf, bei denen beispielhaft über den Umfang betrachtet axiale Kodierstrukturen 336.1, 336.2 und 337 für die jeweils dargestellten, filterseitigen Tankanschlüsse ausgebildet sind, die zur Unterscheidung untereinander jeweils in unterschiedlichen Winkelpositionen zueinander angeordnet sind. Die tankseitigen Filteranschlüsse 301 zeigen die komplementären axial kodierten Anschlussstrukturen der jeweils zugehörigen tankseitigen Filteranschlusselemente als weitere mögliche Ausführungsformen unterschiedlicher Kodierstrukturen.

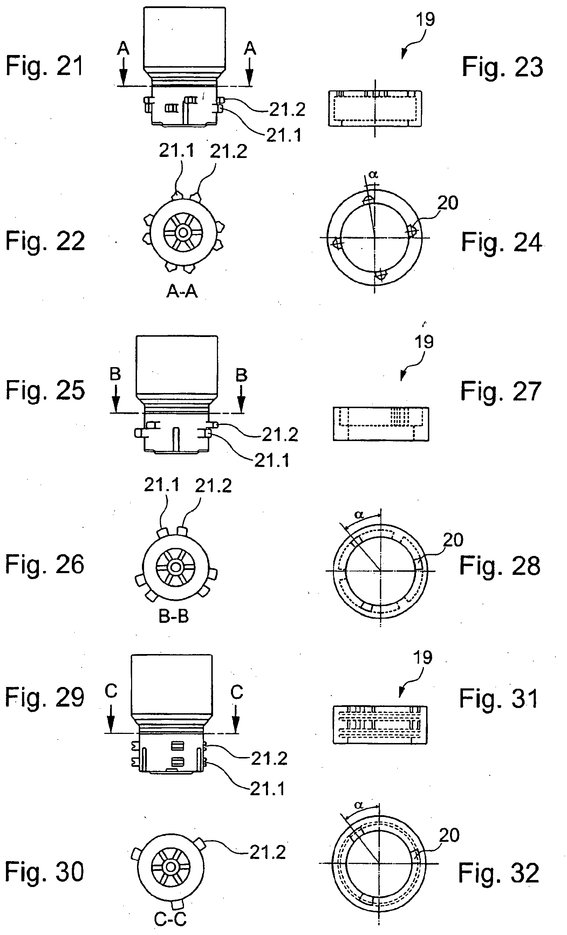

Die Figuren 21 bis 32 zeigen weitere mögliche nicht erfindungsgemäße Ausführungsformen von Verschlüsselungs- und/oder Fixierungsstrukturen für Tank-FilterAnschlusselemente. Hierbei zeigen die Figuren 21 bis 24 eine erste, die Figuren 25 bis 28 eine zweite und die Figuren 29 bis 30 eine dritte mögliche Ausführungsform von Bajonettverbindungen, insbesondere Doppel- bzw. Mehrfach-Bajonettverbindungen als Ergänzung zu den bereits in den Figuren 7 bis zu dargelegten Ausführungsformen.

Der Schwerpunkt bei den nicht erfindungsgemäßen Ausführungsformen der Figuren 21 bis 32 liegen dabei in der Darstellung unterschiedlich möglicher Kodierungen in der Form von Doppel- bzw. Mehrfach-Bajonettverbindungen bzw. Schlüsselkodierungen in der Form von Schlüaselschlossfunktionen. Die Figuren 21 und 22 zeigen die nicht erfindungsgemäße filterseitige Tankanschlusskodier- bzw. Fixierstruktur mit in Draufsicht entsprechender Figur 22 acht Vorsprüngen 21.1 und 21.2, die entsprechend der Figur 21 entlang der Längserstreckung des filterseitigen Tankanschlusselementes sowohl axial als auch in einer radialen Winkelstellung zueinander versetzt als zwei Viererpaare ausgebildet sind.

Die komplementären nicht erfindungsgemäßen Anschluss- bzw.. Kodierstrukturen 20 sind im tankseitigen Filteranschlusselement 19 in den Figuren 23 und 24 gezeigt. In dieser Ausführungsform ist entsprechend der Figur 24 ein Winkel α zwischen einer Achse eines eingezeichneten x-y-Koordinatensystems und einer durch die Öffnung 20 verlaufenden Achse als vergleichsweise spitzer Winkel α dargestellt. Um eine Fixierung des filterseitigen Tankanschlusselementes 8 am tankseitigen Filteranschlusselement 19 zu ermöglichen, müssen die stirnseitig zu vorderst angeordneten Kodiervorsprünge 21.1 entsprechend der umlaufenden Verteilung der Öffnungen 20 am tankseitigen Filteranschlusselement 19 verteilt angeordnet sein, so dass überhaupt ein axiales Einschieben des filterseitigen Tankanschlusselementes ermöglicht wird. Nach Überwindung der ersten Einschubtiefe bezüglich der Kodiervorsprünge 21.1 muss eine Drehung um eine durch das filterseitige Tankanschlusselement verlaufende Längsachse erfolgen, soweit bis der zweite Satz Kodiervorsprünge 21.2 in Übereinstimmung mit den Öffnungen 20 kommt und eine weitere axiale Einführung des filterseitigen Tankelementes in das tankseitige Filterelement ermöglicht, bis zu einer Fixierung nach einer weiter folgenden Drehbewegung um die Längsachse durch das filterseitige Tankanschlusselement.

Die Figuren 25 bis 28 stellen ähnliche nicht erfindungsgemäße Ausführungsformen dar, jedoch mit gegenüber den Ausführungsformen 21 bis 24 abgewandelten Konturen der Öffnungen 20 und der hierzu komplementären Kodiervorsprünge 21 sowie auch hinsichtlich axial und in Draufsicht betrachtet winkelig abgeänderter Ausrichtungen.

Ein weiterer Unterschied liegt auch in der Anzahl der jeweiligen Kodierstrukturen. In den Ausführungsformen 21 bis 24 sind es insgesamt acht auf zwei Ebenen und in den Ausführungsformen 25 bis 28 jeweils nur sechs als zwei dreifachkodierte Vorsprungsebenen. Auch diese hier beschriebenen Kodierstrukturen können ohne weiteres mit anderen z.B. axial ausgerichteten Kodierstrukturen kombiniert werden, um noch weitere Unterscheidungsmöglichkeiten für einzelne Tank-Filter-Anschlussverbindungen zu ermöglichen.

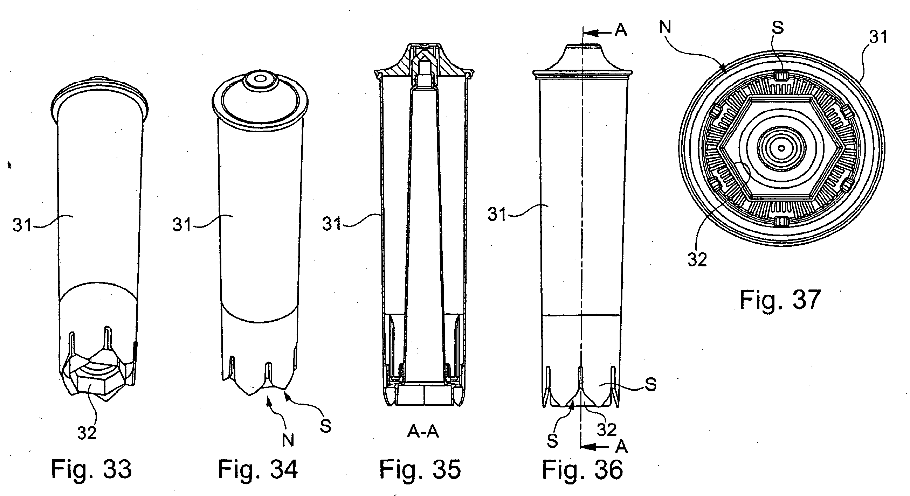

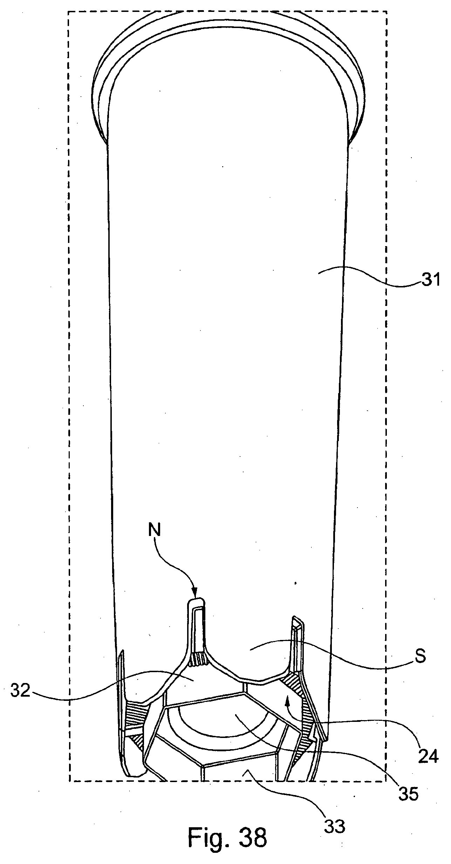

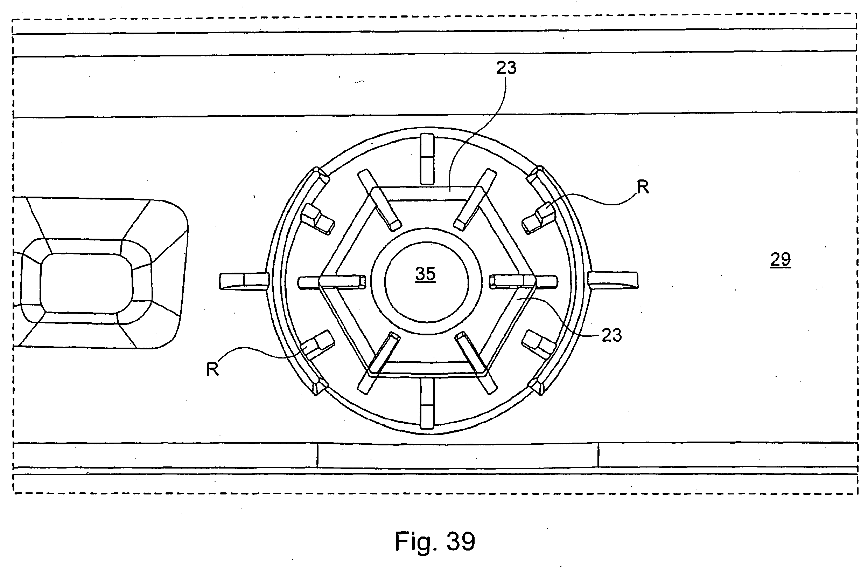

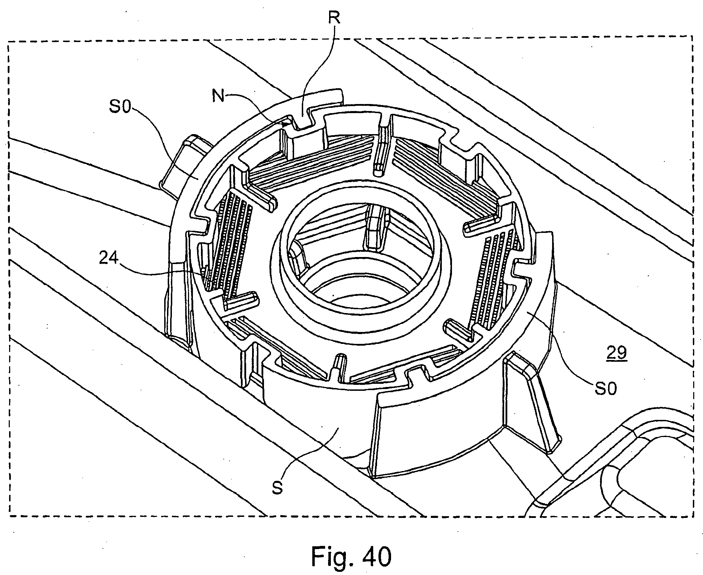

Die Figuren 33 bis 40 zeigen eine weitere Ausführungsform einer Tank-Filter-Anschlussverbindung in unterschiedlichen Ansichten und Darstellungen wie schräge Draufsichten, Schnittdarstellungen, Frontansicht und Unteransicht der Filterpatrone 29 sowie eine Draufsicht auf das tankseitige Filter-Anschlusselement mit und ohne eingefügtes filterseitiges Tank-Anschlusselement (Fig. 39 und 40).

Die wesentlichen Merkmale der Ausführungsform einer Tank-Filter-Anschlussverbindung sind die stirnseitig von der Filterpatrone 31 vorstehenden, etwa keilförmigen Spitzen S und die zwischen ihnen angeordneten Nuten N. Die geometrischen Abmessungen und Winkelstellungen dieser Spitzen S und Nutzen N zueinander ermöglichen wiederum unterschiedliche Kodierungen bzw. Fixierpunkte für das filterseitige Anschlusselement am tankseitigen, Filteranschlusselement.

Die Spitzen können auch der Positionierung beim Einsetzen der Filterpatrone in den Tankanschlussstutzen dienen, insbesondere bei optisch nicht einsehbaren Anschlüssen, z.B. zur Vermeidung einer Beschädigung der Dicht- und/oder anderer Strukturen.

Insbesondere geeignet für eine Kodierung sind hierbei die Schlitzabstände und/oder die Schlitzbreiten und/oder die Breiten der Spitzen bzw. vorstehenden Flügel sowie ebenfalls deren Längen und/oder Abstände, die zu entsprechenden Strukturen am tankseitigen Filteranschlusselement korrespondieren müssen, um den Einsatz einer betriebsgemäß zugelassenen Filterpatrone zu ermöglichen.

Bei diesen korrespondierenden Kodier- und/oder Fixierstrukturen handelt es sich um am tankseitigen Filteranschlusselement ausgebildete Rippen R (Figur 39), deren Zusammenwirken mit den am filterseitigen Tankanschlusselement ausgebildeten Kodier- und/oder Fixierstrukturen N und S am besten in der Figur 40 erkennbar sind. Die Rippen R sind hierbei an einem das filterseitige Tankanschlusselement teilweise umschließenden, wandförmigen Sockel SO ausgebildet.

Die oben beschriebene Kodier- und/oder Fixierstruktur kann in einer davon abgewandelten Ausführungsform auch komplementär ausgebildet sein, also Nuten anstelle von Rippen und Rippen anstelle von Nuten. In einer weiter abgewandelten Ausführungsform ist durchaus aber auch eine gemischte oder kombinierte Kodier- und/oder Fixierstruktur durch Ausbilden von Nuten und Rippen an dem einen und/oder anderen tank- bzw. filterseitigen Anschlusselementes möglich.

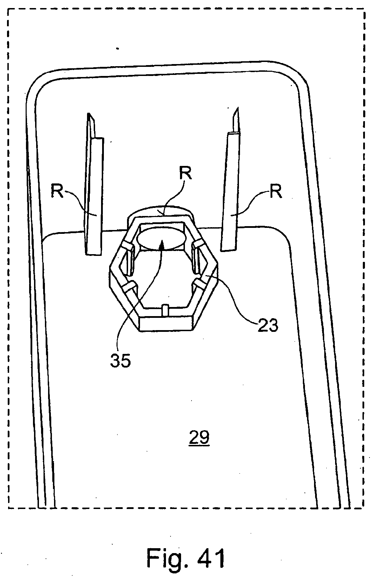

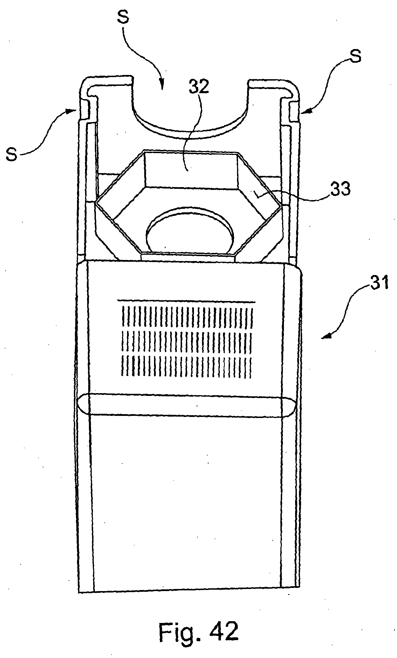

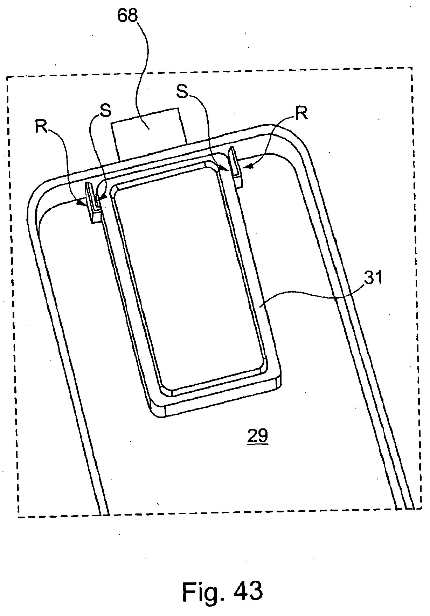

Die Figuren 41 bis 43 stellen eine weitere Ausführungsform dar, bei der der Filter 31 entlang an einer Tankwand angeordneten, zwei winkelig ausgebildete Rippen R aufweisenden und in zwei komplementäre Schlitze S eingreifenden Führung in das Innere des Tanks eingeschoben wird. Der Tank weist in seinem Boden 29 ein polygonförmiges, hier sechskantiges, Filteranschlusselement 23 und eine von innerhalb dieses Anschlusselementes durch die Tankwand nach außen führende Tankablauföffnung 35 auf.

Um einerseits eine ausreichende Wasserabfuhr durch diese wandseitig ausgebildete Tankablauföffnung 35 zu ermöglichen und andererseits eine möglichst vollständige Entleerung des Tanks, ist das polygonförmige Anschlusselement 23 als am Tankboden mit an seiner Oberseite abgeschrägten Polygon ausgebildet. Das filterseitige Tankanschlusselement 32 in der Form einer konisch ausgebildeten, ebenfalls polygonförmigen Formdichtung 32 weist eine entsprechend komplementär geneigte Anschlussfläche auf. Hierdurch kann die Filterpatrone 31 geführt und fixiert durch die Rippen R und komplementären Schlitze S senkrecht an der Tankwand nach unten in das Innere des Tanks eingeführt und formschlüssig und dichtend durch die so ausgebildete Kodierstruktur mit dem Tankboden zur Filterung des im Tank befindlichen Wassers eingesetzt werden.

Vorzugsweise kann auch bei dieser Ausführungsform, wie im Übrigen bei allen anderen Ausführungsformen auch, eine hier nicht dargestellte Bypassstruktur ausgebildet sein, um ein Verschneiden des gefilterten Wassers zu ermöglichen. Eine ergänzende rippenförmige Struktur R und eine komplementäre, schlitzförmige Kodierstruktur S ist hier durch die stirnseitige Ausnehmung S in der Filterwand und die komplementäre Form R der Auslassöffnung 35 im Bodenbereich der Tankwand ausgebildet. Auch diese können entsprechend abgeändert werden, z.B. in eine Vierkantform, eine Dreikantform oder andere sowie um weitere Ausnehmungen und/oder Vorsprünge aufweisende Struktur, zur Unterscheidung unterschiedlich zugelassener Filtertypen.

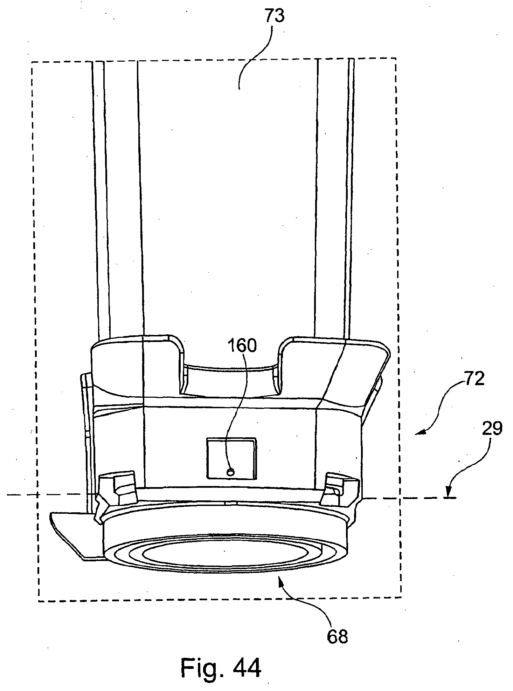

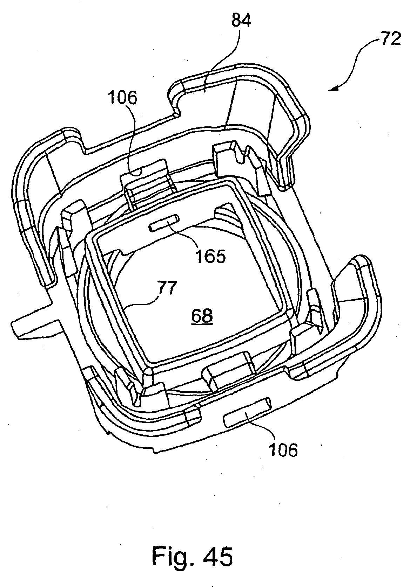

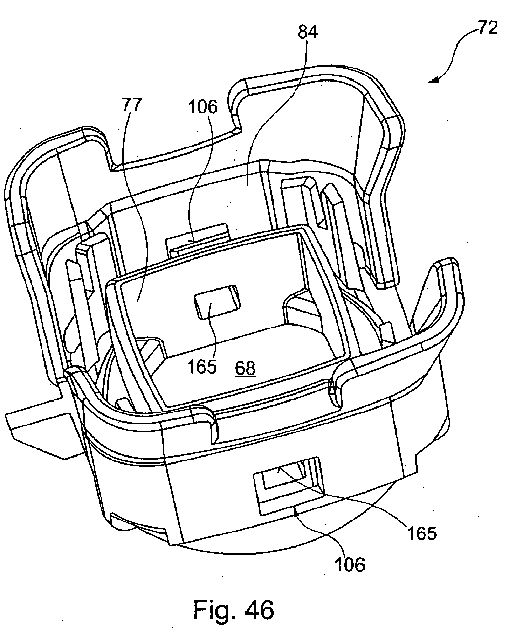

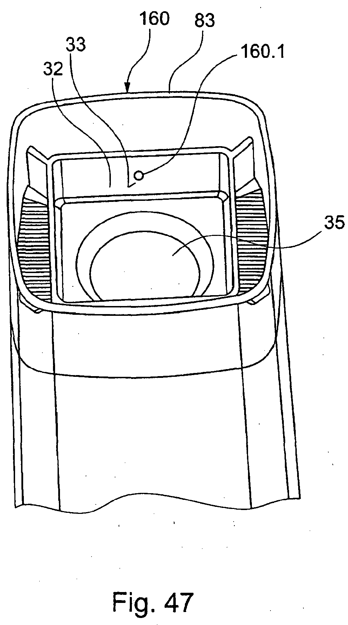

Eine weitere Ausführungsform einer Vierkant-Kodierung für einen Tank-Filter-Anschluss sind durch die Figuren 44 bis 47 dargestellt. Diese Ausführungsform weist zusätzlich zu den in der Figur 6 dargestellten Ausführungsform eine Bypassstruktur auf. Diese Bypassstruktur umfasst in Anlehnung an die in den Figuren 7 bis 20 dargestellte Bypassstruktur in der stirnseitigen Gehäuseverlängerung der Filterpatrone 73 eine Öffnung in der Form einer Bohrung 160 auf, die in Überdeckung mit einer in einem tankseitigen Filtersockel-Anschlusselement 77 ausgebildeten Öffnung 165 den Durchfluss von im Tank befindlichen Rohwasser hin zum tankseitigen Geräteanschluss im Ablaufbereich des Tanks zur Beimischung zu dem durch die Filterpatrone gefilterten Wasser ermöglicht. Hierbei ist filterseitig die Bypassöffnung 160 in der stirnseitigen Verlängerung des Filters ausgebildet und realisiert eine Verschnittvorrichtung in Kombination mit dem tankseitigen Filteranschlusselement 77.

Eine weitere Möglichkeit zur Realisierung einer Verschnittvorrichtung könnte durch die Anordnung dieser Bypassöffnung 160 gegenüber einer in der Außenschale 84 ausgebildeten Öffnung 106 erreicht werden, wobei dann gegebenenfalls im Inneren der Filterpatrone und/oder im Inneren des tankseitigen Anschlusselementes eine entsprechende Kanalführung ausgebildet sein muss, um das so freigegebene Verschnittwasser dem durch die Filterpatrone aus deren Ausflussöffnung 35 ausfließenden, gefilterten Wassers beizumengen.

Eine weitere Verschnittstruktur kann durch die Ausbildung einer Bypassöffnung 160.1 im polygonförmigen, filterseitigen Tankanschlusselement 32, hier in der Form einer vierkantigen Formdichtung 32, realisiert werden, welche wiederum mit der im tankseitigen Filteranschluss 77 ausgebildeten Öffnung 165 korrespondiert. Die Größe der Öffnung 161.1 bestimmt hierbei wiederum die Verschnittmenge. In dieser Ausführungsform ist die Verschnittvorrichtung direkt im Dichtbereich des polygonförmig ausgebildeten Tank-Filter-Anschlusses realisiert.

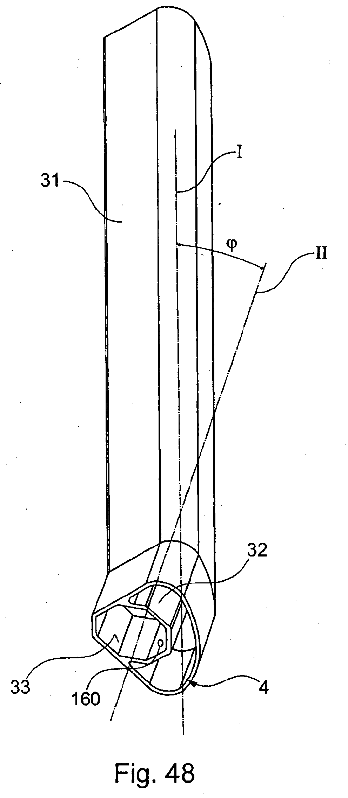

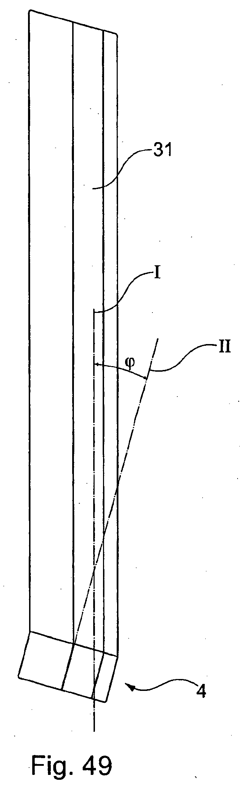

Die Figuren 48 und 49 zeigen eine Ausführungsform eines Tank-Filter-Anschlusses, bei dem eine durch das filterseitige Tankanschlusselement 4 verlaufende Längsachse II gegenüber einer durch das Gehäuse der Filterpatrone 31 verlaufenden Längsachse I schiefwinkelig ausgerichtet ist, hier vorzugsweise in einem spitzen Winkel ϕ. Diese schiefwinkelige oder auch gekröpfte oder auch abgeschrägte Ausrichtung des filterseitigen Tankanschlusselementes 4 gegenüber dem übrigen Filtergehäuse bildet eine weitere Form einer mechanischen Kodierung aus, die mit weiteren, bereits oben beschriebenen, Kodierungsformen kombinierbar ist, insbesondere mit einem hier dargestellten, polygonförmigen Anschlusselement in der Form eines Achtkantes. Dieser Achtkant kann bevorzugt ebenfalls als Formdichtung ausgebildet sein und, wie hier dargestellt, eine Bypass- bzw. Verschnittvorrichtung in der Form einer Öffnung 160 aufweisen, die bei Vorhandensein eines komplementären Elementes im tankseitigen Filteranschlusselement einen entsprechenden Verschnitt des zu filternden Wassers ermöglicht.

Die Figur 48 zeigt die Filterpatrone 31 in einer schrägen Ansicht von unten, bei der das filterseitige Anschlusselement 4 und dessen wesentliche Merkmale zu erkennen sind. Demgegenüber zeigt die Figur 49 eine Seitenansicht, bei der die Abwinkelung zwischen dem Patronengehäuse 31 und dem filterseitigen Tankanschluss 4 für einen beispielhaft dargestellten Winkel gezeigt ist.

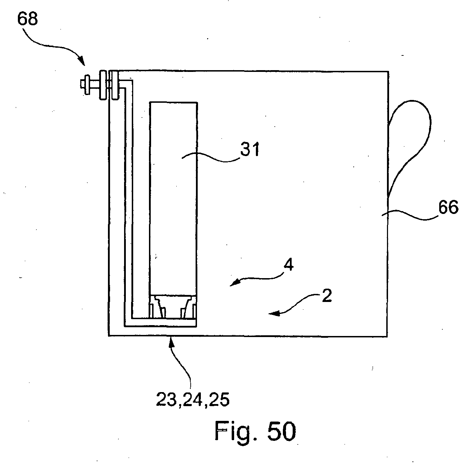

Die Figur 50 zeigt eine weitere Ausführungsform, bei der der Tank 66 wiederum als Einschubtank ausgebildet ist, in welchem eine Patrone 31 zur Filterung des darin enthaltenen Wassers an einem tankseitigem Filteranschlusselement 2 angeschlossen ist. Dieses tankseitige Anschlusselement 2 ist über eine Leitung, hier vorzugsweise in der Form eines stabilen Rohres, mit dem tankseitigen Geräteanschluss 68 verbunden. Dieser tankseitige Geräteanschluss 68 ist vom betriebsgemäßen bodenseitigen Bereich des Tankes 66 beabstandet vom Tankinneren nach außen geführt. In dieser Ausführungsform ist der Geräteanschluss 68 beispielhaft in einer in der Oberkante einer Tankwand eingelassenen Aufnehmung fixiert, die in vorteilhafter Weise als lösbare Verbindung ausgebildet sein kann, so dass ein einfaches Entnehmen und Reinigen ermöglicht wird.

Der Betrieb des Tankes ist durch einfaches Einschieben in eine entsprechend ausgebildete Aufnahme eines Gerätes möglich, bzw. dessen Befüllen mit frischem, anschließend durch den Filter 31 zu filterndes Wasser durch Herausziehen. Das tankseitige Filteranschlusselement 2 kann hierbei alle oben beschriebenen Kodierungs- und/oder Fixierungs- und/oder Dichtungsmerkmale aufweisen, so dass auch in dieser Schubladen-Ausführungsform zuverlässig die Verwendung einer nicht betriebsgemäß vorgesehenen Filterpatrone aufgeschlossen werden kann, was im Übrigen auch für die Ausführung nach den Figuren 41 bis 43 gilt.

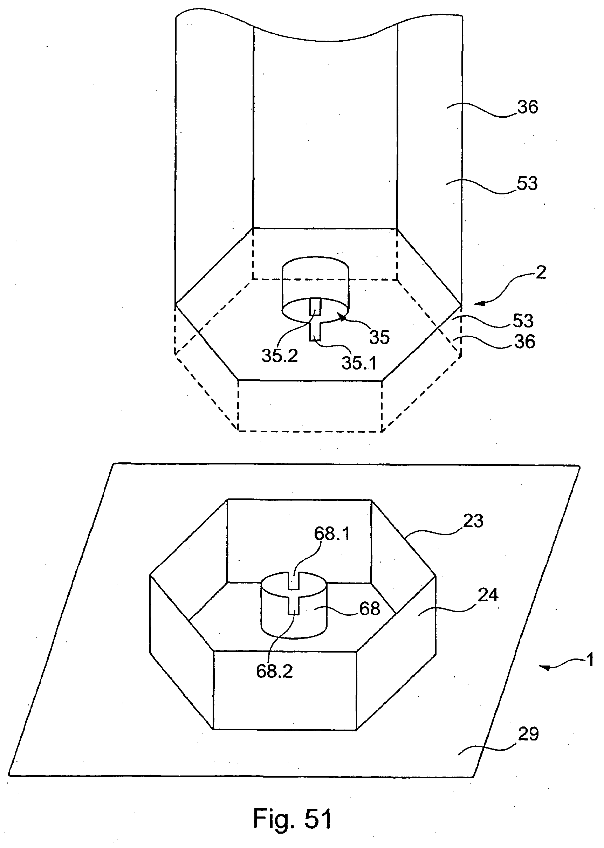

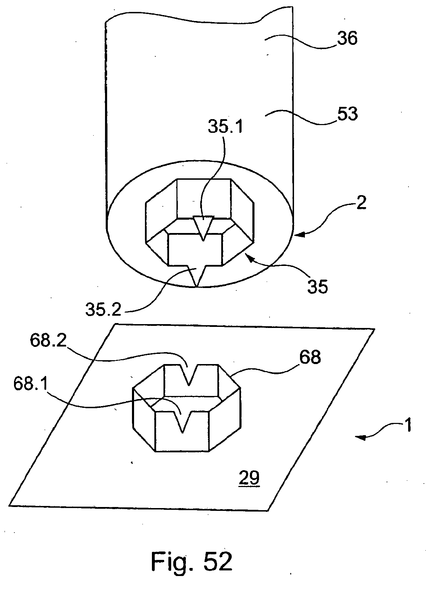

Zwei weitere mögliche nicht erfindungsgemäße Ausführungsformen von Kodierungen des Anschlusses zwischen Tank und Filter werden anhand der Figuren 51 und 52 dargestellt und beschrieben. Bei der Figur 51 weist das Gehäuse der Filterpatrone 53 selbst eine polygone Außenkontur in der Form eines Sechskantes auf, der in eine komplementäre, tankseitige polygone Kodier- und/oder Fixierstruktur 23 einsetzbar ist. Die fest durchgezogenen Linien zeigen die Filterpatrone 53 in einer Ansicht von schräg unten mit einem im Grunde ebenen Boden in dessen Mitte der Filterauslass 35 für das filtrierte Wasser beispielhaft als zylinderförmig vorstehendes Rohr mit zwei stirnseitigen axial vorstehenden Ansätzen 35.1 und 35.2 ausgebildet ist. Dieses zylindrisch vorstehende Auslasselement 35 ist durch die beiden axial vorstehenden Flügel kodiert und bildet mit seiner Stirnseite gegenüber der Stirnseite eines komplementären im tankseitigen Filteranschluss ausgebildeten

Auslass- und Aufnahmeelementes 68 mit seinen bei den Kodiernuten 68.1 und 68.2 eine axiale Kodier- und/oder Dichtstruktur bzw. -kontur. Die Filterpatrone 53 kann nur dann funktionstüchtig in das tankseitige Filteranschlusselement 1 eingesteckt werden, wenn die Stirnseite des Filterauslasses 35 dichtend mit der Stirnseite des tankseitigen Geräteauslasses 68 zusammenpasst.

Die hier beispielhaft dargestellte, sechskantige Außenkontur der Filterpatrone 53 kann in der mit den durchgezogenen Linien dargestellten Ausführungsform nicht erfindungsgemäße in den Anschlusssockel 23 des tankseitigen Filteranschlusselementes 1 fixierend und gegebenenfalls auch dichtend eingesteckt werden. Hierbei dient der Innenumfang des Anschlusssockels 23 zur Fixierung und gegebenenfalls zur Dichtung gegenüber dem Außenumfang bzw. gegenüber deren Anschluss.

Um eine weitere nicht erfindungsgemäße Befestigungsmöglichkeit zwischen der hier beispielhaft als Sechskant dargestellten, polygonförmigen Außenkontur der Filterpatrone 53 und einem entsprechend komplementären tankseitige Anschlusssockel 1 aufzuzeigen ist das Gehäuse 36 der Filterpatrone 53 durch die gestrichelten Linien als gegenüber dem zuvor beschriebenen Filterboden verlängert dargestellt. Dieser polygonförmige, gegenüber dem Boden der Filterpatrone vorstehende Anschlussring kann zur Fixierung der Filterpatrone über den tankseitigen Filteranschlussstutzen 23, wiederum fixierend und vorzugsweise dichtend je nach Ausführung, soweit übergestülpt oder ebenfalls eingesteckt werden, bis die beiden Innenkodierungen, des Filterauslasses 35 und des Tankauslasses 68, dichtend aneinander anstehen bzw. deren hier beispielhaft gezeigten flügelartigen und komplementären schlitzartigen Kodierstrukturen dichtend aneinander anstehen bzw. ineinander greifen. Zur Wasserführung vom Tank ins Innere der Filterpatrone sind entsprechende Öffnungen und/oder Kanäle vorgesehen, die hier jedoch nicht gezeigt sind. Ebenfalls vorgesehen und nicht gezeigt können entsprechende Bypassstrukturen sein, wie sie bereits oben ausführlich beschrieben sind. Die Figur 51 zeigt somit nicht erfindungsgemäß sowohl eine Fixierung der Filterpatrone am Innenumfang des tankseitigen Filteranschlusselementes 23 als auch an dessen Außenumfang 24.

Die Figur 52 zeigt nicht erfindungsgemäß demgegenüber eine dahingehend abgewandelte Ausführungsform, dass das Gehäuse 36 der Filterpatrone beispielhaft rund dargestellt ist und der Filterauslass 35 als polygone Struktur, hier wiederum beispielhaft als Sechskant, der zusätzlich wieder eine stirnseitige Kodierung in der Form zweier axial vorstehender, kodierender, dreieckiger Spitzen oder Flügeln aufweist. Auch hier kann die Filterpatrone nur dann funktionstüchtig mit dem tankseitigen Filteranschlusselement 1 verbunden werden, wenn die beiden Auslassstrukturen 35 und 68 stirnseitig axial dichtend aneinander angefügt werden können. Von der Darstellung weiterer Kodierungs- und/oder Fixierungsstrukturen wurde aus Gründen der Übersichtlichkeit angesehen. Es können jedoch alle bereits oben beschriebenen Strukturen auch hier entsprechend vorgesehen werden. Auch für die beiden Ausführungsformen entsprechend der Figuren 51 und 52 gilt, dass auch diese Kodierungsstrukturen zwischen Filterseite und Tankseite vertauscht und/oder abgeändert und/oder durch weitere Konturen und/oder Strukturen ergänzt werden können.

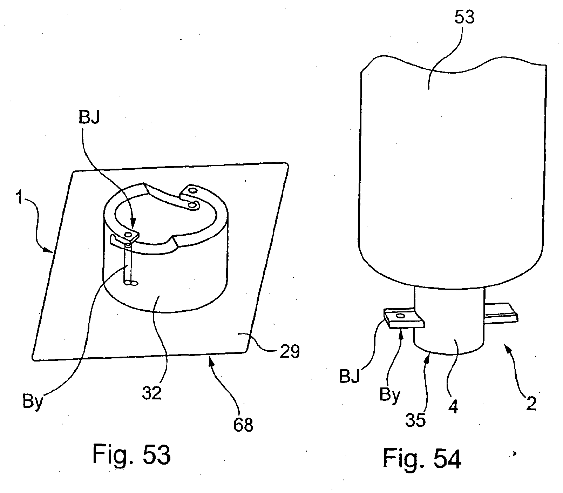

Zwei weitere Ausführungsmöglichkeiten bezüglich einer Bypasskonfiguration zwischen einem tankseitigen Filteranschlusselement 1 und einem filterseitigen Tankanschlüsselement 2 sind in den Figuren 53 bis 56 dargestellt. Die Figuren 53 und 54 zeigen nicht erfindungsgemäße hier beispielhaft und schematisch eine Bypassanordnung BY, die einen Verschnitt zwischen durch die Filterpatrone 53 gefilterte Wasser und einem nicht oder anderweitig gefiltertem oder aufbereitetem Wasser ermöglicht. Die Bypass- oder Verschnittstrecke BY ist in dieser Ausführungsform mit einem Bajonettverschluss BJ derart kombiniert, dass in einem Bajonettflügel BJ eine Öffnung BY vorgesehen ist, die mit einer weiteren, an einem zum Bajonettflügel komplementären Bajonettschlitz BJ angeordneten weiteren Bypassöffnung BY derart korrespondiert, dass bei betriebsgemäß eingesetzter Filterpatrone eine entsprechende Bypassführung realisiert wird. In der hier dargestellten Ausführungsform ist die im tankseitigen Filteranschlusselement 1 gezeigte Bypassöffnung BY vom stirnseitigen Anschlussbereich des tankseitigen Anschlusssockels bis unterhalb der Stelle geführt, in welcher der filterseitige Tankanschlussstutzen 4 in betriebsgemäß eingesetzter Position endet, so dass das am Filterbett der Filterpatrone 53 vorbeigeführten Bypasswasser mit dem durch das Filterbett der Filterpatrone 53 filtrierten Wasser vermischt und dem tankseitigen Geräteanschluss 68 zugeführt wird.

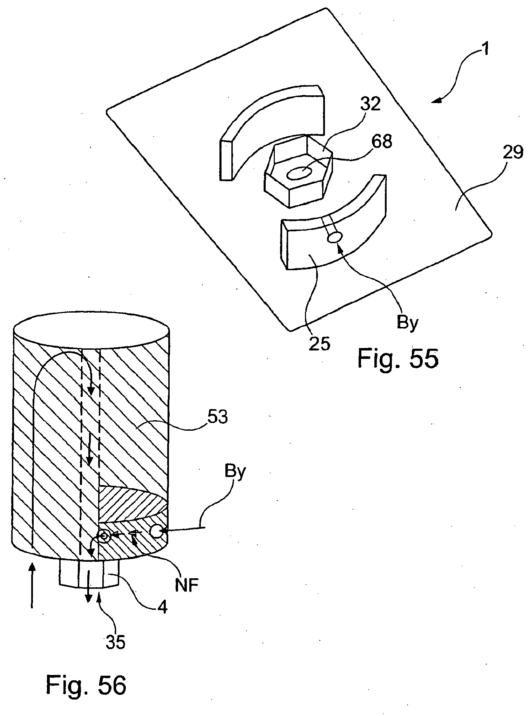

Die Figuren 55 und 56 zeigen eine demgegenüber abgewandelte Ausführungsform, dass die Bypassstrecke BY über eine von einem Hauptfilterbett HF der Filterpatrone 53 separate Aufbereitungs- und/oder Filterstrecke geführt wird, die hier beispielhaft und symbolisch als Nebenfilterstrecke NF dargestellt ist. Diese zweite Aufbereitungs- und/oder Filterstrecke NF kann z.B. eine Aktivkohlefilterstrecke und/oder andere Aufbereitungsmechanismen und/oder -medien enthalten. Nach Durchfließen dieser Nebenfilterstrecke NF wird das über diese Bypassstrecke BY geführte Wasser mit dem durch die Filterstrecke HF der Filterpatrone 53 filtrierte Wasser vermischt, so dass es ebenfalls durch den tankseitigen Geräteanschluss 68 entnommen werden kann.

In der in Figur 56 gezeigten Ausführungsform der Filterpatrone 53 ist die Zusammenführung der beiden separat über den Hauptfilter HF und über den Nebenfilter NF geführten bzw. aufbereiteten Wasserstrecken im Inneren der Filterpatrone 53 durch eine Einmündung in die innere Fallleitung der Filterpatrone 53 beispielhaft und schematisch dargestellt. In einer abgewandelten Ausführungsform kann durchaus aber ergänzend oder alternativ auch eine eigene Auslassöffnung aus der Filterpatrone heraus in Richtung zum tankseitigen Geräteanschluss 68 vorgesehen sein, wobei gegebenenfalls für alle drei Ausführungsformen gelten kann, dass sie alle innerhalb des tankseitigen Filteranschlussstutzens 32 münden, so dass, wiederum beispielhaft, eine Abdichtung durch einen Formschluss der beiden polygonförmigen Anschlusselemente des Tanks und des Filters möglich sind.

Die Einleitung des Bypassstroms in die Nebenfilterstrecke ist nur dann möglich, wenn die ebenfalls als Kodierung fungierende Öffnung BY an dem axial vom Tankboden 29 hoch stehenden Verschlüsselungselement 25 mit der entsprechenden filterseitigen Bypassöffnung BY im betriebsgemäß vorgesehenen Zustand eingesteckt ist. Ist keine Überdeckung dieser beiden Öffnungen gegeben, so kann kein entsprechender Verschnitt realisiert werden. Der tankseitige Filteranschluss 1 entsprechend der Figur 55 ist ebenfalls nur schematisch und beispielhaft dargestellt und kann mit unterschiedlichsten Varianten der oben bereits beschriebenen Kodier- und Anschlussstruktur versehen sein, so dass gegebenenfalls nur eine einzige von allen sechs hier möglichen Winkelausrichtungen für einen zulässigen Filterabschluss freigeschaltet ist. Von der Darstellung solcher Kodierstrukturen wurde an dieser Stelle aus Gründen der Übersichtlichkeit abgesehen.

Grundsätzlich gilt auch für diese Ausführungsformen in den Figuren 53 bis 56, dass auch sie mit allen oben beschriebenen Kodierungs- und/oder Fixierungs- und/oder Dichtstrukturen und/oder kombiniert werden können.

### Bezugszeichenliste:

- 1: Anschlusssockel
- 2: Tankanschlusselement
- 3 4: Anschlussstutzen
- 5 6: Seitenschlitz
- 23: Anschlusssockel
- 24: Dichtfläche
- 25: Außenschale
- 26: Sperrelement
- 27: Bodenrippe
- 28: Bodenrippe
- 29: Tankboden
- 30: Innenrippe
- 31: Filterpatrone
- 32: Formdichtung
- 33: Dichtfläche
- 34: Eintrittsschlitz
- 35: Abflussöffnung
- 36: Filterpatronengehäuse
- 37: Schnappelement
- 38: Aufnahme
- 39: Unterkante
- 40: Anschlag
- 41: Bodenöffnung
- 42: Nuten
- 43: Schlüsselelement
- 44: Tankanschlussbereich
- 45: Boden
- 46: Axialdichtung
- 47: Trennlinie
- 48: Scheibe
- 49: Ringschulter
- 50: Ventilkörper
- 51: Feder
- 52: Tankboden
- 53: Filterpatrone
- 54: Anschlusssockel
- 54.1: Anschlusssockel
- 55.: Aussenfläche
- 56.: Abflussleitung
- 57.: Dichtung
- 58.: Wand
- 59.: Wand
- 60.: Aussparung
- 61.: Öffnung
- 62.: Sockelwand
- 63.: Sockelwand
- 64.: Sockelwand
- 65: Bypassöffnung
- 66: Tank
- 67: Sauganschluss
- 68: Geräteanschluss
- 69: Längsachse
- 70: Zwischenraum
- 71: Rand
- 72: Anschlusselement
- 73: Patrone
- 74: Fuss
- 75: Einlauföffnung
- 76: Einlauföffnung
- 77: Anschlusssockel
- 78: Bodenplatte
- 79: Dichtfläche
- 80: Dichtfläche
- 81: Formdichtung
- 82: Auslauf
- 83: Außenwand
- 84: Außenschale
- 85: Adapter
- 86: Adapter
- 87: Axialer Vorsprung
- 88: Axialer Vorsprung
- 89: Axialer Vorsprung
- 90: Axialer Vorsprung
- 91: Axialer Vorsprung
- 92: Axialer Vorsprung
- 93: Axialer Vorsprung
- 94: Axialer Vorsprung
- 95: Axialer Vorsprung
- 96: Axiale Ausnehmung
- 97: Axiale Ausnehmung
- 98: Axiale Ausnehmung
- 99: Axialer Vorsprung

## Patentansprüche

1. Wassertank mit Filterpatrohe für wasserführende Geräte, insbesondere Haushaltsgeräte, wie Getränkeautomaten, insbesondere Kaffeeautomaten, Trinkwasserspender, Koch- und Backgeräte, Dampfgeräte, insbesondere Dampfbügeleisen, Dampfreiniger, Hochdruckreiniger, Luftreiniger und - konditionierer oder dergleichen, wobei ein Sauganschluss am Wassertank zum Ansaugen von Wasser aus dem Wassertank mit Mitteln zur Erzeugung eines Unterdrucks und ein Filteranschluss zum Anschluss einer Filterpatrone im Inneren des Wassertanks vorgesehen ist, wobei eine Verschneidevorrichtung zum Verschneiden gefilterter Flüssigkeit mit ungefilterter und/oder anderweitig filtrierter oder aufbereiteter Flüssigkeit vorgesehen ist, **dadurch gekennzeichnet, dass** ein tankseitiges Filteranschlusselement (23) in der Form eines Anschlusssockels (23) zur Realisierung einer polygone Kontur als axialer Vorsprung (23) mit einem polygonförmige Außenumfang (24) ausgebildet ist, wobei ein filterseitiges Tankanschlüsselement (2) mit komplementärer Patronenanschlussstruktur nach Aufstecken der Filterpatrone, formschlüssig und dichtend mit dem Innenumfang (33) der Patronenanschlussstruktur am Außenumfang (24) die Filterpatrone (31) fixierend und abdichtend anliegt.

2. Wassertank mit Filterpatrone nach Anspruch 1, dadurch gekenntzeichnet, dass die Verschneidevorrichtung verstellbar ausgebildet ist.

3. Wassertank mit Filterpatrone nach einem der vorgenannten Ansprüche, **dadurch gekennzeichnet**, das eine winkelabhängige Verschnitteinstellung für die Verschneidevorrichtung vorgesehen ist.

4. Wassertank mit Filterpatrone nach einem der vorgenannten Ansprüche, **dadurch gekennzeichnet, dass** die Kodierungsstrukturen wenigstens teilweise zugleich als Fixierungselemente (16) zur Befestigung der Filterpatrone ausgebildet sind.

5. Wassertank mit Filterpatrone nach einem der vorgenannten Ansprüche, **dadurch gekennzeichnet, dass** das tankseitige Filteranschlusselement eine Umfangsform (24) mit drehsymmetrischem Querschnitt aufweist.

6. Wassertank mit Filterpatrone nach einem der vorgenannten Ansprüche, **dadurch gekennzeichnet, dass** das tankseitige Filteranschlusselement eine Umfangsform (24) mit Vierkantquerschnitt, Sechs.kantquerschnitt, 8-Kantquerschnitt aufweist.

## Claims

1. A water tank with filter cartridge for water-conducting devices, in particular household appliances, such as beverage dispensers, in particular coffee dispensers, drinking water dispensers, cooking and baking devices, steam dispensing devices, in particular steam irons, steam cleaners, high-pressure cleaners, air pressure cleaners and conditioners, or the like, wherein a suction connector is provided on the tank for the suctioning of the water from the tank using means for generating low pressure and a filter connector is provided for the connection of a filter cartridge in the interior of the tank, wherein a blending device is provided for the blending of filtered liquid with unfiltered and/or otherwise filtered or processed liquid, **characterized in that** the filter connection element (23) on the tank side is designed in the form of a connection base (23) for the realization of a polygonal contour as an axial projection (23) with a polygonal outer circumference (24), wherein a tank connection element (2) on the filter side comprising a complementary cartridge connection structure, after attachment of the filter cartridge, in a positive and sealing manner fits with the inner circumference (33) of the cartridge connection structure to the outer circumference (24) fixing and sealing the filter cartridge (31).

2. A water tank with filter cartridge according to Claim 1, **characterized in that** the blending device is designed to be adjustable.

3. A water tank with filter cartridge according to one of the aforementioned claims, **characterized in that** an angle-dependent bypass setting is provided for the blending device.

4. A water tank with filter cartridge according to one of the aforementioned claims, **characterized in that** the coding structures are designed at least partially at the same time as fixation element (16) for mounting the filter cartridge.

5. A water tank with filter cartridge according to one of the aforementioned claims, **characterized in that** the filter connection element on the tank side has a circumferential shape (24) with rotationally symmetrical cross section.

6. A water tank with filter cartridge according to one of the aforementioned claims, **characterized in that** the filter connection element on the tank side has a circumferential shape (24) with square cross section, hexagonal cross section, octagonal cross section.

## Revendications

1. Réservoir d'eau avec cartouche filtrante pour des appareils conducteurs d'eau, plus particulièrement des appareils ménagers, comme des distributeurs automatiques de boissons, plus particulièrement des machines à café, des distributeurs d'eau potable, des appareils de cuisson, des appareils à vapeur, plus particulièrement des fers à repasser à vapeur, des nettoyeurs à vapeur, des nettoyeurs à haute pression, des épurateurs d'air et des climatiseurs ou autres, un raccord d'aspiration étant prévu au niveau du réservoir pour l'aspiration de l'eau hors du réservoir d'eau avec des moyens de production d'une dépression et un raccord de filtre étant prévu pour le raccordement de la cartouche filtrante à l'intérieur du réservoir d'eau, un dispositif de mélange étant prévu pour le mélange du liquide filtré avec un liquide non filtré et/ou filtré autre part ou un liquide traité autrement **caractérisé en ce qu'**un élément de raccordement de filtre côté réservoir (23) est conçu sous la forme d'un socle de raccordement (23) pour la réalisation d'un contour polygonal en tant que saillie axiale (23) avec une circonférence extérieure (24) de forme polygonale, un élément de raccordement de réservoir côté filtre (2) appuyant, avec une structure de raccordement de cartouche, après l'emboîtement de la cartouche filtrante, avec une complémentarité de forme et de manière étanche, avec la circonférence interne (33) de la structure de raccordement de cartouche, la cartouche filtrante (31) de manière fixe et étanche contre la circonférence externe (24).

2. Réservoir d'eau avec cartouche filtrante selon la revendication 1, **caractérisé en ce que** le dispositif de mélange est conçu de manière réglable.

3. Réservoir d'eau avec cartouche filtrante selon l'une des revendications précédentes, **caractérisé en ce qu'**un réglage de by-pass en fonction de l'angle est prévu.

4. Réservoir d'eau avec cartouche filtrante selon l'une des revendications précédentes, **caractérisé en ce que** les structures de codage sont conçues au moins partiellement de manière identique aux éléments de fixation (16) pour la fixation de la cartouche filtrante.

5. Réservoir d'eau avec cartouche filtrante selon l'une des revendications précédentes, **caractérisé en ce que** l'élément de raccordement de filtre côté réservoir présente une forme périphérique (24) avec une section transversale présentant une symétrie de rotation.

6. Réservoir d'eau avec cartouche filtrante selon l'une des revendications précédentes, **caractérisé en ce que** l'élément de raccordement de filtre côté réservoir présente une forme périphérique (24) avec une section transversale carrée, hexagonale, octogonale.
